# EUROPEAN PATENT SPECIFICATION

(11) **EP 1 767 840 B1**
(45) Date of publication and mention of the grant of the patent: **11.11.2009**
(21) Application number: 06405399.4
(22) Date of filing: 21.09.2006
(51) Int. Cl.: F16K 31/04, F16K 27/04

(54) **Motor-driven hydraulic valve cartridge**
Motorisch betätigbare, hydraulische Ventilpatrone
Cartouche de valve hydraulique commandée par moteur

(30) Priority: 27.09.2005 US 235976
(43) Date of publication of application: 28.03.2007
(73) Proprietor: Geberit International AG, 8645 Jona (CH)
(72) Inventor: Johnson, Dwight N., Carlsbad, CA 92009 (US); Marti, Silvio, Schaumburg, IL 60173 (US)
(74) Representative: Groner, Manfred

(56) References cited:
- EP-A- 1 387 117
- US-A- 4 650 156
- US-A- 5 318 064
- US-A- 6 056 201
- US-A- 6 145 540

## Description

### BACKGROUND OF THE INVENTION

Field of the Invention -- This invention pertains to valves for controlling fluid flow, and more particularly to valves of the type having an electric motor driving a flow controlling element.

In recent years, it has become a desirable practice to equip faucets, soap dispensers, and flushing devices used with plumbing fixtures, such as sinks, toilets and urinals, in public restrooms or institutional facilities, with electrically actuated valves controlled by various types of light-actuated or proximity sensors.

Such electrically actuated valves provide a number of benefits over manually operated valves. For example, cleanliness is promoted, by ensuring that the fixtures are flushed after use, and by making it unnecessary for persons using the facilities to physically touch any part of the electrically actuated faucets, soap dispensers or flushing devices associated with the fixtures. Water and pumping energy are also conserved through improved control of the amount of water used for flushing and hand washing activities. Water temperature can also be controlled automatically, in a more efficient and effective manner, using electrically actuated valves.

Electrically actuated valves are also sometimes utilized to advantage in residential or commercial construction, for controlling the temperature and/or flow of water in sinks, bathtubs, and showers.

In general, it is desirable that electrically actuated valves be small in physical size, producible at low cost, and robust enough to provide a long operational life. Having an electrically actuated valve that is small in size allows the valve to be more readily integrated into existing faucets or flushing devices, or into new forms of devices that look and operate much like existing faucets and flushing-type controls. In order to achieve small size, low cost, and long life, it is generally desirable that an electrically actuated valve be simple in its construction and operation.

It is also often necessary that the electrically actuated valve consume very little electrical power during operation, so that the valve may operate on battery power. To allow for installation flexibility, and to reduce inventory costs, it is further desirable, in some applications, to have the electrically actuated valve be operable from either a DC or an AC current source.

One form of an electrically actuated valve that has considerable potential for providing the desired attributes discussed above, utilizes an electric motor in combination with a pair of valve disks. The valve disks have mating faces which seal against one another to block fluid flow through the valve. The disks also include complementary passageways extending through the mating surfaces, which can be aligned to allow fluid flow through the valve. One of the disks is generally stationary, and the other rotatable by the motor, so that fluid flow can be selectively controlled through the valve by using the motor to drive the passageways in the rotatable disk in to and out of alignment with the passageways in the stationary disk.

Prior electrically actuated valves, of the type used in the residential and commercial plumbing industries, however, have not fully capitalized on the potential of motor driven valve disks.

In general, prior motor driven disk-type valves in the plumbing industries have been limited to applications where the flow rate of a relatively small volume of fluid is to be controlled, such as is the case in mixing valves for regulating the temperature of water delivered through faucets for sinks and tubs, and to applications where positive shut-off is not required. Where the flow rates of larger volumes of fluid are to be controlled, and in particular where positive shut-off of the flow is required, such as is the case in toilet or urinal flush valves, motor driven disk-type valves have generally been limited to use as pilot valves, in combination with diaphragm or piston type valves of conventional construction.

These limitations on the usage of prior motor driven disk-type valves have been the result of a number of factors, including the torque requirements for moving one valve disks relative to another valve disk, packaging constraints, and, in some instances, a misguided desire to retain as many of the components of a traditional faucet or control valve being modified for use with a motor driven disk-type control element.

In prior valves controlling relatively small amounts of fluid, such as faucets for sinks and tubs, the motor and various other components required to link the motor to a rotatable valve disk have sometimes been integrated into the faucet as separate elements. U.S. Patent No. 4,611,757, to Saether, U.S. Patent No. 6,056,201, to Ta, and U.S. Patent No. 4,700,885, and to Knebel are illustrative of such arrangements. Generally speaking, prior motor driven disk-type valves of the type having separate elements integrated into the faucet are more complex and difficult to manufacture or repair than is desirable.

As further exemplified by Saether and Ta, prior motor driven disk-type valves, for small volume flow applications, have, out of necessity, also typically utilized the motor for providing only small relative movements of the valve disk needed for controlling mixing of hot and cold fluid streams. Traditional manually operated knobs or levers have been utilized in parallel with the motor for controlling an overall flow of fluid from the faucet, because controlling the combined flow of mixed fluids typically requires larger movements of the valve disks, and for providing positive shut-off.

Using manual controls in parallel with the motor, in this manner, has been necessary, in some cases, to minimize the amount of torque and power consumption required from the motor for overcoming friction between the rotatable and stationary disks, when the motor is driving the rotatable disk. It has also typically been necessary to keep the size of the disks moved by the motor small in physical size, to reduce the torque and power output requirements on the motor, thereby limiting the fluid flow capacity of the disk-type valve.

The use of such parallel manual controls has been particularly necessary in prior valves where positive shut-off is desired, due to the substantially higher rotational torque required for generating relative movement between the disks in shut-off type valves, as compared to disk-type valves which are utilized only for controlling flow rate or volume.

Where positive shut-off is required, it is necessary that faying surfaces of the disks fit together closely enough to preclude any flow of fluid between the faying surfaces. Providing such a close, fluid-tight fit typically requires that the faying surfaces be highly polished and smooth. In addition, a layer of grease is often applied between the faying surfaces to further ensure that a fluid-tight joint is achieved between the disks.

Some sort of biasing means, such as a spring, is also typically provided to urge the faying surfaces into intimate contact with one another. The faying surfaces often fit together so tightly, in fact, that even air is precluded from entering the joints, with the result being that ambient air or fluid pressure around the disks also acts to force the disks tightly together, and create significant friction forces between the disks which must be overcome in order to move one disk relative to the other.

The close fit, grease, and joining forces exerted on the disks, in combination, make the disks fit together so tightly that substantial breakaway and rotational torque must be applied in order to create relative movement between the disks. In prior motor driven disk-type valves, the torque required from the motor was larger than the torque that could be supplied by motorized drive units of a physical size that was small enough, as a practical matter, to be usable in valve arrangements for plumbing fixtures, except where the disks were of a small physical size. Where a shut-off capability was required in prior valves, and/or where a large volume of water needed to be controlled, it has been necessary in prior disk-type valves to provide parallel, manually operated knobs or levers, of the type described in the patents listed above.

The increased breakaway torque, inherent in disk-type valves having shut-off capability, is particularly troublesome in battery powered valves. The increases breakaway torque causes a large current spike from the battery, every time that the motor is energized to reposition the movable valve disk. As is well known to those having skill in the art, these current spikes tend to substantially reduce battery life. It is desirable to provide a drive apparatus for a shut-off, disk-type, valve, which does not generate large current spikes, and provides a more uniform power draw from the battery during start-up and operation of the motor.

The necessity for using parallel manual controls in prior valves is particularly undesirable in motor driven disk-type valves having one or more of the disks formed from a ceramic material. It is well known that disks of ceramic material are highly resistant to wear, and thus provide long operational life. Ceramic materials are brittle, however, and do not withstand tensile stresses sometimes imposed on them in prior valves having manual actuation knobs or levers, which may intentionally, or inadvertently, be moved too far, by a person using the lever or knob for controlling the valve.

In some prior motor driven disk-type valve arrangements, a motor element has been connected to the rotating disk of a valve apparatus through gear reduction stage, in order to increase the torque output of the motor applied to driving the rotatable disk. This approach is illustrated in U.S. Patent No. 5,411,241, to Nilsson, et al., and U.S. Patent No. 6,082,703, to Fava, et al.

The reduction gear trains utilized such in prior motor driven disk-type valve arrangements have only been capable of providing a relatively small gear reduction, and corresponding increase in motor torque, however, within the constraints of the small package sizes typically required for motor driven disk-type valve arrangements of the type used in residential, institutional, and commercial installations. As a result, the use of such reduction gear stages in prior motor driven disk-type valve arrangements has been limited to valves having disks of a relatively small size, to valves where a shut-off capability was not required, and applications where torque requirements were still relatively low. Arrangements such as those taught in Nilsson, for example, with a gear train large enough to provide sufficient torque would be too large to be practical for use as the sole means of controlling flow and providing shut-off capability in a typical faucet.

In one prior approach to dealing with the large torque requirements in valves where large volumes of water must be supplied in a short period of time, as is the case in a toilet flush valve, for example, existing flexible diaphragm-type valve elements have sometimes been modified, for actuation by a pilot valve in the form of a motor driven disk-type valve, of small size, which controls flow in a pilot circuit to actuate a flexible diaphragm or piston for controlling a main flow of fluid. U.S. Patent No. 6,082,703, to Fava, et al. is illustrative of such an approach.

Alternatively, a solenoid operated valve has been used, instead of a motor driven disk-type valve, to simply replace the original manually operated lever of the flush valve, with the solenoid being directly coupled to the flexible diaphragm for operation of the valve. U.S. Patent No. 3,778,023, to Billeter, and U.S. Patent No. 6,056,261, to Aparicio, et al. are illustrative of this approach.

Although the goal of providing electrical actuation is achieved, through such prior practices in larger volume valves, the electrically actuated valve that results is still subject to certain deficiencies of the original valve components that are retained in the modified valve, such as the limited operational life of the flexible diaphragm. Furthermore, prior valves having pilot valves in the form of motor driven disks-type valves, and those having solenoids directly driving a flexible diaphragm or piston are undesirably complex in construction, making them difficult to manufacture and repair. These approaches are inherently undesirably complex, costly to produce, and have reduced reliability. Valves using a motorized disk-type pilot valve in combination with a traditional flexible diaphragm have inherently reduced reliability, due to the fact that two valves must be provided to perform a single function. Valve actuating solenoids are also notoriously unreliable.

In another prior approach to incorporating an electrically actuated valves into fluid circuits, in both large and small volume flow applications, the electrically actuated valve has sometimes been supplied in a stand-alone form, having an integral valve block with ports for connecting the electrically actuated valve into the fluid circuit at a point remote from the faucet, flushing device, fixture, etc., to be controlled. U.S. Patent No. 6,629,645, to Mountford, et al., U.S. Patent No. 6,082,703, to Fava, et al., and U.S. Patent No. 5,411,241 to Nilsson, et al., and U.S. Patent Application No. 2004/0193326 A1, to Phillips, et al. are illustrative of such an approach. Such remote mounting is disadvantageous because additional plumbing is usually required. Furthermore, several fluid connections to the fluid circuit external to the valve must be dealt with, during installation, repair, or replacement of the remotely mounted electrically actuated valve.

What is needed, therefore, is an improved apparatus and method for providing control of a fluid through use of a motor driven, disk-type hydraulic valve. It is also desired that such a valve be capable of operation in both small and large flow applications, for electrically controlling a flow of fluid without the necessity for using additional low-reliability components, such as flexible diaphragms and/or solenoid-type valves. It is further desirable that such a valve be amenable to the use of ceramic disk elements.

### SUMMARY OF THE INVENTION

The invention provides an improved method and apparatus for electrically controlling fluid flow, through use of a motor-driven hydraulic valve cartridge, for controlling a flow of fluid through a cavity in a fluid circuit external to the valve cartridge.

In one form of the invention the valve cartridge includes a valve apparatus and a motor joined into a unitary structure adapted for removable attachment to the external fluid circuit. The unitary structure has a wetted portion thereof including a fluid inlet and a fluid outlet of the valve cartridge. The wetted portion may be disposed to extend into the cavity when the valve cartridge is attached to the external fluid circuit. The valve apparatus has a rotatable element for controlling fluid flow between the inlet and the outlet of the valve cartridge. The motor is fixedly attached to the valve apparatus and operatively connected to the rotatable element of the valve apparatus for selectively controlling a flow of fluid from the inlet to the outlet of the valve cartridge.

A valve cartridge, according to the invention, may include a housing providing an environmentally sealed enclosure around all but the wetted portion of the valve cartridge.

A valve cartridge, in accordance with the invention, may also include a cavity seal element for sealing an interface between the cavity and the valve cartridge. Where the cavity includes an inlet thereto, disposed within the cavity, the valve cartridge may further include an inlet seal for sealing an interface between the inlet to the cavity and the inlet to the valve cartridge. The outlet of the valve cartridge may be configured for providing fluid communication with the cavity, when the wetted portion of the valve cartridge is installed into the cavity of the external fluid circuit.

In applications where the cavity defines an axis of insertion of a valve cartridge into the cavity, with the axis of insertion extending out of the cavity, the inlet of a valve cartridge, according to the invention, may be aligned for sealing engagement with the inlet of the cavity when the wetted portion of the valve cartridge is inserted into the cavity along the axis of rotation.

A valve apparatus, of a valve cartridge, in accordance with the invention, may include a stationary seal disk, and a mating rotatable regulator disk operatively connected to the motor to be selectively rotated thereby, for controlling a flow of fluid from the inlet to the outlet of the valve cartridge. At least one of the seal disk and the regulator disk may be formed from a ceramic material. A valve cartridge, in accordance with the invention, may also include a position detector for determining a rotational position of the regular disk.

A motor-driving hydraulic valve cartridge, in accordance with the invention, may include a valve apparatus having a valve housing, a seal disk, and a rotatable regulator disk, with the valve housing defining the fluid inlet and the fluid outlet of the valve cartridge, an axis of rotation of the regulator disk, and the wetted portion of the valve cartridge. The seal disk is fixedly attached to the valve housing, and the regulator disk is operatively connected to the motor to be rotatable thereby about the axis of rotation. The seal disk and regulator disk define corresponding mating, sealing surfaces thereof, for providing a sealed interface between the sealing surfaces. The seal disk and regulator disk each further define respective fluid passages therethrough which are alignable through selective rotation of the seal disk by the motor, to form a fluid flow path through the seal and regulator disks from the inlet to the outlet of the valve cartridge.

A motor-driven hydraulic valve cartridge, according to the invention, may include a valve apparatus, a motor, and a drive train, joined into a unitary structure adapted for removable attachment to the external circuit. The valve apparatus may include a stationary seal disk, and a mating rotatable regulator disk, with the rotatable regulator disk being operatively connected to the motor by the drive train, and selectively rotatable by the motor, for controlling a flow of fluid from the inlet to the outlet of the valve cartridge. The valve apparatus may provide a fluid-type seal between the drive train and the cavity in the external fluid circuit. The valve cartridge may include a drive train support attaching the drive train to the valve housing. The motor may be attached to the drive train support.

According to an aspect of the invention, the drive train may include a gear train. A gear train, in accordance with the invention, may include one or more planetary gear reduction stages, with each planetary gear reduction stage having an input pinion driving one or more planetary gears operatively mounted on a planet carrier, with the planet carrier of each one of the one or more planetary gear reduction stages providing an output of that one of the one or more planetary gear reduction stages.

A gear train, according to the invention, may include two or more planetary gear reduction stages having their input planets and outputs concentrically aligned about an axis of rotation of the regulator disk. The two or more planetary reduction stages may be axially disposed from one another along the axis of rotation of the regulator disk, with the output of one of the two or more planetary gear reduction stages forming the input pinion of the second one of the two or more planetary gear reduction stages.

The two or more planetary gear reduction stages may be operatively connected in a series gear drive relationship, with one of the two or more planetary gear stages forming a first stage of the gear train, and another one of the two or more planetary gear stages forming a final stage of the gear train, with the output of the final stage of the gear train being operatively attached to the regulator disk in such a manner that rotation of the input pinion of the first stage results in the output of the final stage rotating the regulator disk. The input pinion of the first stage of the gear train may be attached directly to the motor, to be driven thereby.

The gear train may further include a drive train housing, disposed about the multiple planetary gear reduction stages, and having an internal surface thereof configured to form a common stationary ring gear in gear mesh relationship with the planet gears of all of the planetary gear reduction stages, to thereby operatively connect the multiple planetary gear reduction stages to one another in a series gear train relationship extending from the first to the final stage of the gear train.

A valve cartridge, according to the invention, may further include a position detector operatively linked to the output of the final stage of the gear train, to thereby detect an angular position of the output of the final stage about the axis of rotation of the regulating disk. The final stage may also include one or more surface features thereof, having a configuration that is detectable by the position detector.

The invention may also take the form of a method for constructing a motor-driven hydraulic valve cartridge, for controlling a flow of fluid through a cavity in a fluid circuit external to the valve cartridge. Such a method may include joining a valve apparatus and a motor into a unitary structure adapted for removable attachment to the external circuit. Such a method may also include joining the valve apparatus and motor in such a manner that the unitary structure has a wetted surface thereof, including a fluid inlet and a fluid outlet of the valve cartridge, with the wetted portion being disposed to extend into the cavity when the valve cartridge is attached to the external fluid circuit. The method may further include configuring the valve apparatus to have a rotatable element for controlling fluid flow between the inlet and outlet of the valve cartridge.

A method, according to the invention, may include fixedly attaching the motor to the valve apparatus and operatively connecting the motor to the rotatable element of the valve apparatus for selectively controlling a flow of fluid from the inlet to the outlet of the valve cartridge. Some forms of a method, according to the invention, may also include operatively connecting the motor to the rotatable element with a planetary gear reduction train. Such a planetary gear reduction train may have multiple gear reduction stages.

Other aspects, objectives and advantages of the invention will become more apparent from the following detailed description when taken in conjunction with the accompanying drawings.

### DESCRIPTION OF THE DRAWINGS

The accompanying drawings incorporated in and forming a part of the specification illustrate several aspects of the present invention, and together with the description serve to explain the principles of the invention. In the drawings:

FIG. 1 is a perspective illustration of an exemplary embodiment of a motor-driven hydraulic valve cartridge, according to the invention;

FIG. 2 is an orthographic view of the exemplary embodiment of the valve cartridge shown in FIG. 1, illustrating a wetted portion of the valve cartridge;

FIG. 3 is a cross section of the exemplary embodiment of the valve cartridge of FIG. 1, showing the valve cartridge attached to an external fluid circuit defining a cavity of the fluid circuit into which the wetted portion of the valve cartridge extends;

FIG. 4 is an exploded view of several salient components of the motor-driven hydraulic valve cartridge of FIGS. 1-3, specifically showing a valve apparatus, a multi-stage planetary gear drive, a motor, and a position sensor, of the exemplary embodiment;

FIG. 5 is an exploded perspective view of the valve apparatus of the exemplary embodiment, shown in FIGS. 1-3;

FIG. 6 is an exploded view illustrating the multi-stage planetary gear drive of the exemplary embodiment;

FIG. 7 is a partial cross sectional view taken along line 7-7, as shown in FIG. 3, illustrating the connection between an output of the multi-stage planetary gear-reduction drive and a valve stem of the valve apparatus of the exemplary embodiment;

FIG. 8 is a section view taken along line 8-8, as shown in FIG. 3, illustrating the operative attachment of a position sensing switch to a contoured surface of the output of the planetary gear reduction drive;

FIG. 9 is a partial cross section of the exemplary embodiment of the valve cartridge of FIGS. 1-3, showing the valve cartridge in a closed position, for blocking flow through the valve cartridge;

FIG. 10 is a perspective illustration of a drive module, according to the invention, viewed from a bottom surface thereof adapted for interface with an attachment to a valve apparatus, according to the invention;

FIG. 11 is a perspective illustration of a valve apparatus, according to the invention, showing features of an upper face thereof adapted to interface with the drive module of FIG. 10; and

FIG. 12 is an orthographic cross-sectional illustration of the exemplary embodiment of the valve cartridge shown in FIG. 1, illustrating the manner in which the components of the valve cartridge are secured to one another by just two screws.

While the invention will be described in connection with certain preferred embodiments, there is no intent to limit it to those embodiments. On the contrary, the intent is to cover all alternatives, modifications and equivalents as included within the scope of the invention as defined by the appended claims.

### DETAILED DESCRIPTION OF THE PREFERRED EMBODIMENT

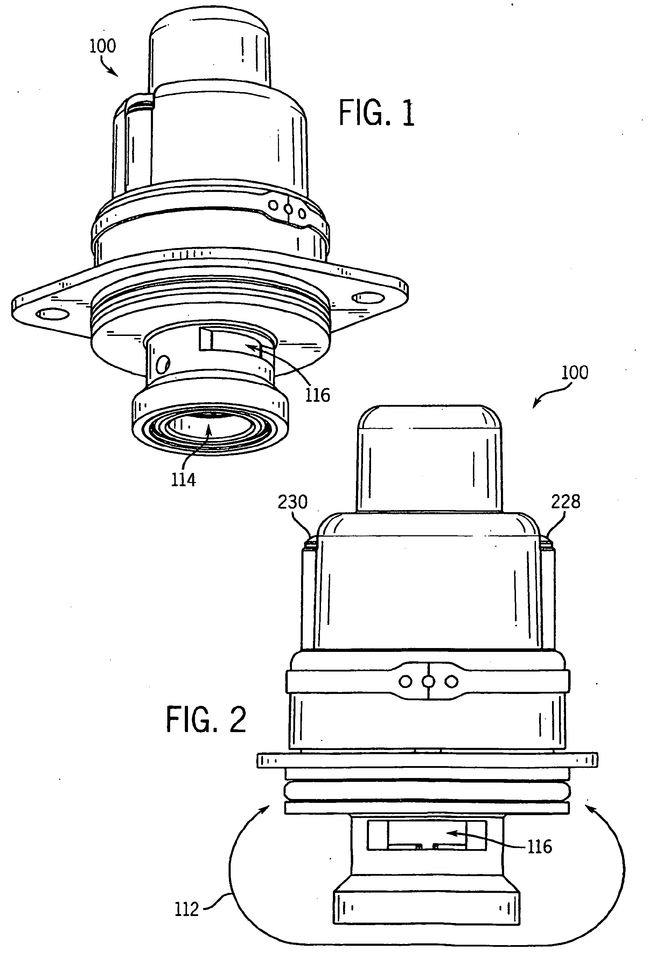

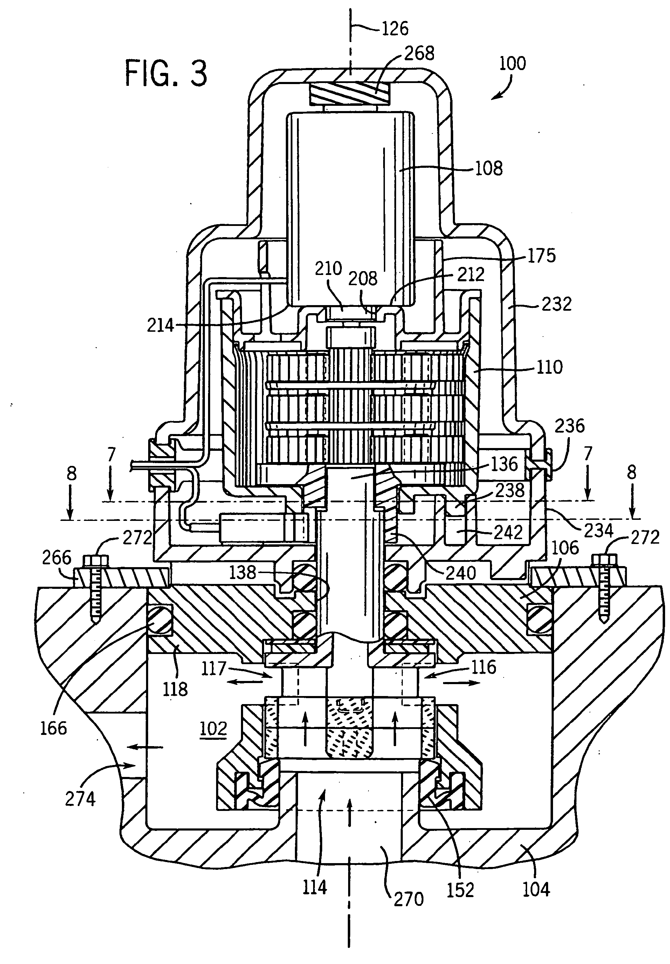

FIGS. 1-3 show an exemplary embodiment of the invention, in the form of a motor-driven hydraulic valve cartridge 100, for controlling a flow of fluid through a cavity 102 (FIG. 3) in a fluid circuit 104 (FIG. 3) external to the valve cartridge 100. As shown in FIG. 3, the external fluid circuit is represented by a cut-away cross sectional portion of a plumbing fixture, such as a urinal or a toilet.

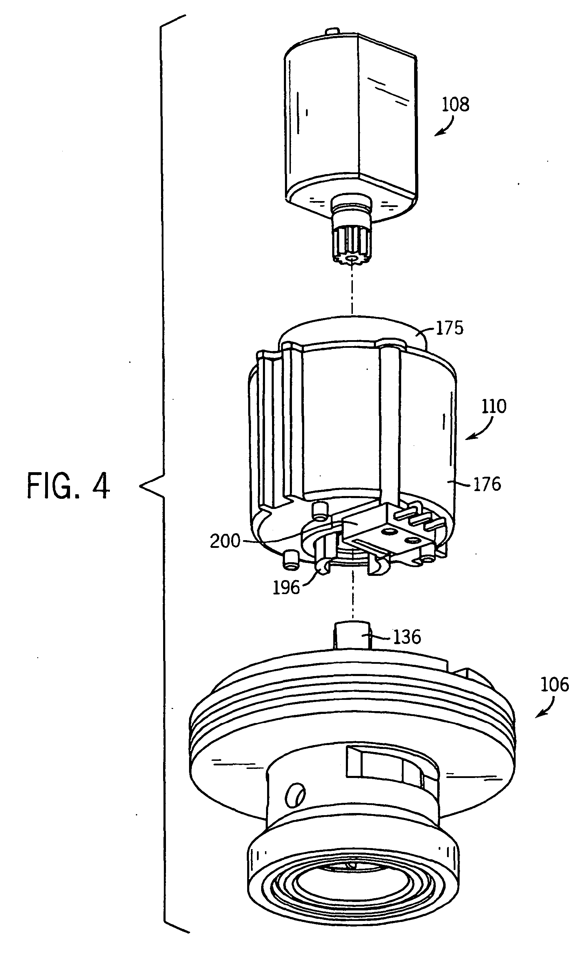

As shown in FIG. 4, the exemplary embodiment of the valve cartridge 100 includes a valve apparatus 106, a motor 108, and a drive train 110, joined into a unitary structure, as illustrated in FIGS. 1 and 2, which is adapted for removable attachment to the external fluid circuit 104 in the manner shown in FIG. 3.

The unitary structure, formed by the valve cartridge 100 of the exemplary embodiment, has a wetted portion 112 thereof, as indicated by line 112 in FIG. 2, including a fluid inlet 114 and a pair of oppositely facing fluid outlets 116, 117 of the valve cartridge 100, as shown in FIGS. 1-3. The wetted portion 112 of the valve cartridge 100 is disposed on the unitary structure forming the valve cartridge 100 in such a manner that the wetted portion 112 extends into the cavity 102 when the valve cartridge 100 is attached to the external fluid circuit 104, as shown in FIG. 3.

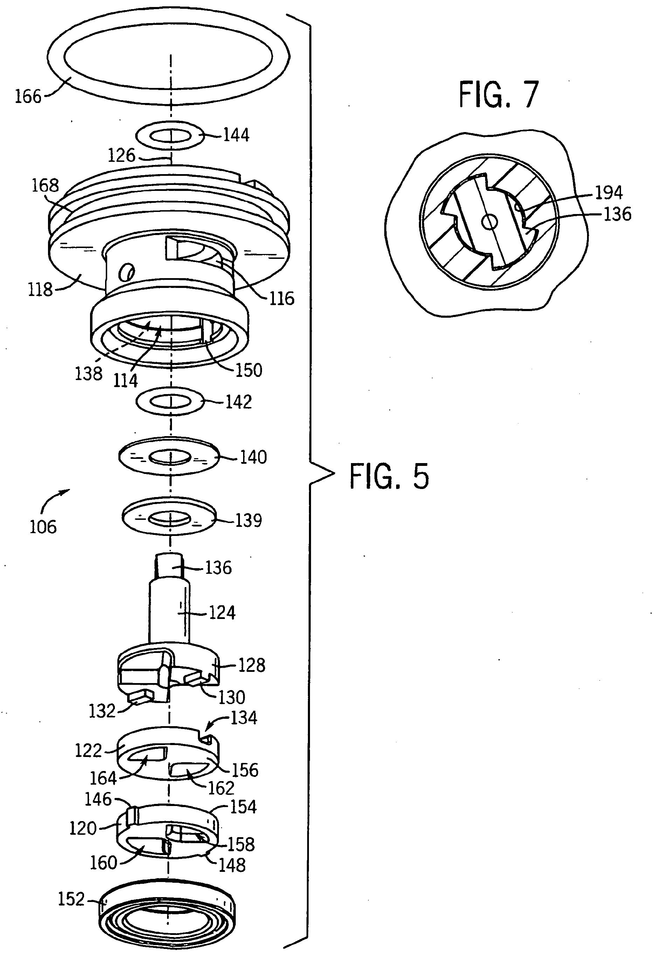

As best seen in FIG. 5, the valve apparatus 106 includes a valve housing 118, a seal disk 120, a rotatable regulator disk 122, and a valve stem 124.

The valve housing 118 defines the fluid inlet 114 and the oppositely facing fluid outlets 116, 117 of the valve cartridge 100. The valve housing 118 also defines an axis of rotation 126 of the regulator disk 122. The valve housing 118 further defines the wetted portion 112 of the valve cartridge 100.

The valve stem 124 extends along the axis of rotation 126 of the regulating disk 122, with the valve stem 124 having a first end 128 thereof including a pair of diametrically spaced, axially extending blades 130, 132 for drivingly engaging a slot 134 extending across the upper face (as shown in FIG. 5) of the regulating disk 122. A second end 136 of the valve stem 124 extends through a central bore 138 in the valve housing 118 for engagement with the output end of the drive train 110 in the manner shown in FIGS. 3-5, and described in more detail below.

As shown in FIGS. 3 and 5, the valve apparatus 106 further includes a Teflon thrust washer 139 and a metal washer 140 disposed between the first end 128 of the valve stem 124 and the valve housing 118. A pair of o-rings 142, 144 are also provided for sealing the juncture of the valve stem 124 to the bore 138 in the valve housing 118, in a manner allowing the valve stem to rotate about and translate along the axis of rotation 126.

As shown in FIG. 5, the seal disk 120 includes a pair of diametrically spaced radially extending lugs 146, 148, configured for engaging corresponding slots 150 (only one of which is shown in FIG. 5) to thereby fixedly attach the seal disk 120 to the valve housing 118 in a manner precluding rotation of the seal disk 120 about the axis of rotation 126. The seal disk 120 is restrained against axial movement along the axis of rotation 126 by an inlet seal 152, of resilient material, which is fixedly inserted into the inlet 114, with an edge of the inlet seal 152 being configured to bear against the seal disk 120.

As will be understood by examining FIGS. 3 and 5, the seal disk 120 and regulator disk 122 define respective corresponding mating sealing surfaces 154, 156 thereof which are configured for providing a sealed interface between the sealing surfaces 154, 156.

As best seen in FIG. 5, the seal disk 120 and regulator disk 122 each further define respective fluid passages 158, 160, 162, 164 therethrough, which are alignable, through selective rotation of the regulator disk 122 by the motor 108, to form a fluid flow path through the seal and regulator disks 120, 122 from the inlet 114 to the outlets 116, 117 of the valve cartridge 100.

In the exemplary embodiment of the valve cartridge 100, both the seal disk 120 and the regulator disk 122 are formed of a ceramic material, to provide a long operational life of the valve cartridge 100. In other embodiments of the invention, however, other materials may be used for one or both of these seal and regulator disks 120, 122.

As shown in FIG. 5, the valve apparatus 106, of the exemplary embodiment of the valve cartridge 100, includes a large o-ring seal 166, disposed in a circumferential groove 168 in the valve housing 118, for providing a fluid-type seal between the valve cartridge 100 and the cavity 102 of the external fluid circuit 104, as shown in FIG. 3, to thereby separate the wetted portion 112 of the valve cartridge 100 from the remainder of the valve cartridge 100.

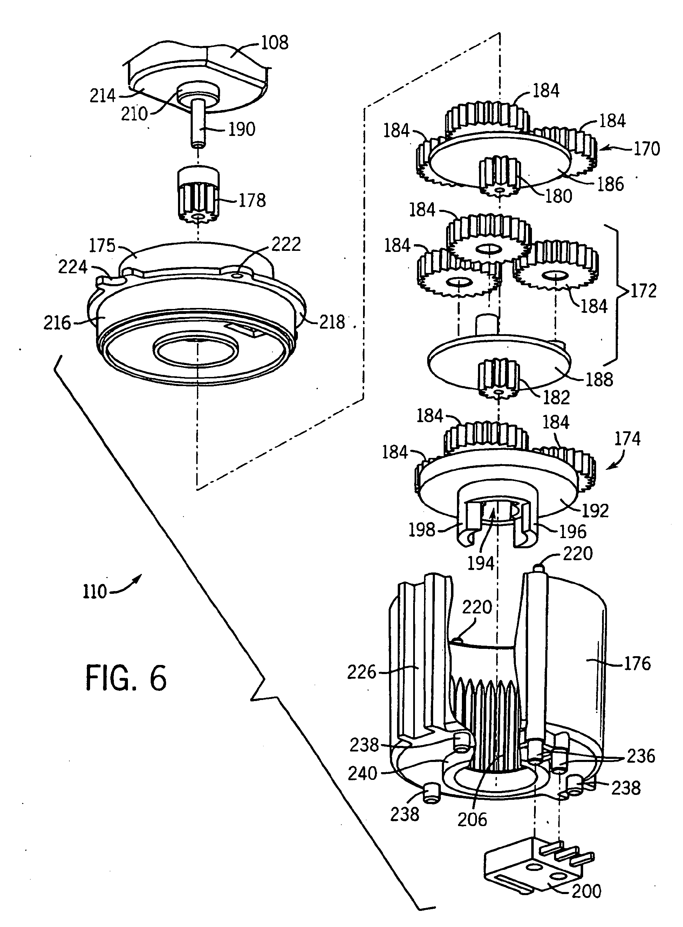

As shown in FIG. 6, the drive train 110, of the exemplary embodiment of the valve cartridge 100, includes a gear train having multiple planetary gear reduction stages. Specifically, the drive train 110 includes first, intermediate, and final planetary gear reduction stages 170, 172, 174, operatively joined to one another within a common drive train housing 176.

Each of the three planetary gear reduction stages 170, 172, 174 has a respective input pinion 178, 180, 182, driving three planetary gears operatively mounted on a planet carrier 186, 188, 192. The first and intermediate planetary gear stages 170, 172 each have three planet gears 184 mounted on identical planet carriers 186, 188. The input pinion 180 of the intermediate planetary gear stage is integrally attached to the planet carrier 186 of the first planetary gear stage 170, in such a manner that the gear 180 functions both as an output of the first planetary gear stage 170 and the input pinion 180 to the intermediate planetary gear stage 172. In similar fashion, the input pinion 182 to the final gear stage 174 is integrally attached to the planet carrier 188 of the intermediate gear reduction stage 172, and performs a dual function as the output of the second gear reduction stage 172 and the input to the final gear reduction stage 174. The input pinion 178 to the first gear reduction stage 170 is attached directly to an output shaft 190 of the motor 108.

The planet carrier 192 of the final gear reduction stage 174 has a different output arrangement than the planet carriers 186, 188 of the first and intermediate gear reductions stages 170, 172, and includes a thicker base, but is otherwise identical to the planet carriers 186, 188 of the first and intermediate gear stages 170, 172. The base of the planet carrier 192 of the final gear reduction stage is thicker than the bases of the planet carriers 186, 188 of the first and intermediate gear reduction stages 170, 172, to provide increased strength for resisting the significantly greater torque that is transmitted through the final gear reduction stage 174, as a result of the gear reduction which occurs in the drive train 110. The output of the final gear reduction stage 174 includes a centrally located receptacle 194 having a convoluted periphery configured for drivingly engaging the second end 136 of the valve stem 124, in the manner illustrated in FIG. 7.

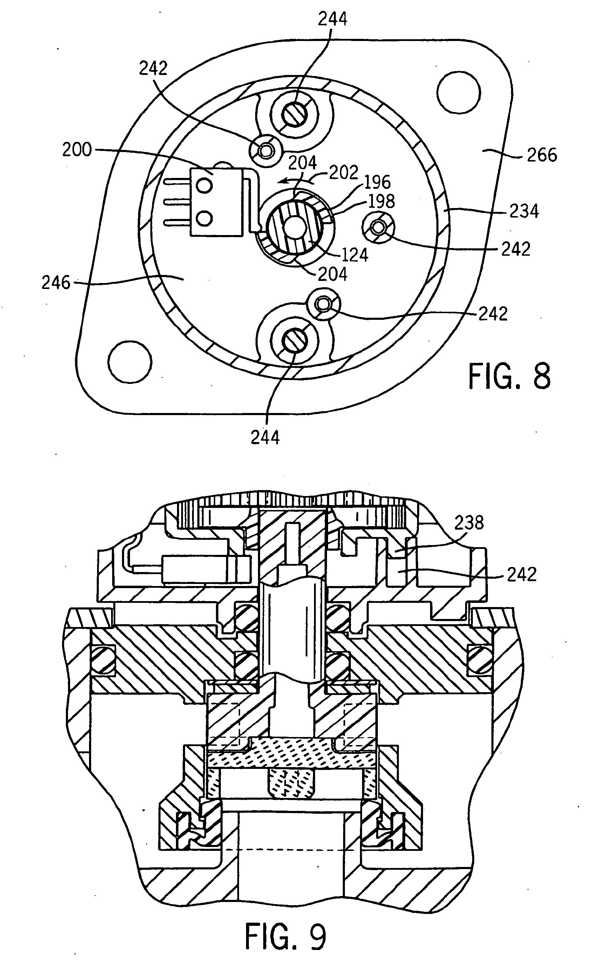

As shown in FIGS. 6 and 8, the output of the final gear reduction stage 174 further includes an axially extending, somewhat castellated, collar 196 having an outer surface 198 configured for actuating a position sensor, in the form of a switch 200, as the output of the final stage 174 is rotated about the axis of rotation 126.

The exemplary embodiment of the valve cartridge 100 is configured as an on/off type valve, wherein the motor 108 drives the valve stem 124 of the valve apparatus 106 in a single direction, as indicated by arrow 202 in FIG. 8. Those having skill in the art will recognize, that by virtue of the arrangement of the passages 158, 160, 162, 164, in the seal and regulator disks 120, 122, the valve cartridge 100 will alternately transition from a completely open condition of the valve cartridge 100, as shown in FIG. 3, to a completely closed condition of the valve cartridge 100, as shown in FIG. 9, each time the motor 108 rotates the valve stem 124 through an angle of 90°. Those having skill in the art will further recognize that, by virtue of the shape of the outer surface 198 of the collar 196 on the output of the final stage 174 of the drive train 110, the switch 200 will move alternately between an actuated and a de-actuated state corresponding respectively to the open and closed conditions of the valve cartridge 100. It will be further noted, from inspection of FIG. 8, that the leading edges of the castellations of the collar 196 are configured in the form of ramps 204 to facilitate smooth actuation of the switch 200.

The first, intermediate, and output stages 170, 172, 174, of the planetary gear train, are disposed within the output portion 176 of the drive train housing. The interior surface of the output portion 176 of the drive train housing includes a plurality of gear teeth forming a common stationary ring gear 206 in a gear mesh relationship with the planet gears 184 of the first, intermediate, and output planetary gear reduction stages 170, 172, 174. By virtue of this arrangement, the stationary ring gear 206 operatively connects the three planetary gear reduction stages 170, 172, 174 to one another in a series gear train relationship, extending from the first stage 170 to the final stage 174 of the gear train.

The three stages 170, 172, 174 of the planetary gear train are retained within the output portion 176 of the drive train housing, by the input portion 175 of the drive train housing, which is attached to the upper end (as shown in FIGS. 3, 4, and 6) of the output portion 176 of the drive train housing. As shown in FIGS. 3 and 6, the input portion 175 of the drive train housing includes a centrally located bore 208 for receipt of a pilot 210 of the motor 108, which is disposed concentrically about the shaft 190 of the motor 108.

The input portion 175 of the drive train housing also defines a shoulder 212 for mating engagement with an end surface 214 of the motor 108. These features of the motor 108 and input portion 175 of the drive train housing therefore cooperate to provide a positive location of the drive pinion 178, with respect to the input portion of the drive train housing, when the motor 108 is installed into the input portion of the drive train housing.

The input portion 175 of the drive train housing further includes a pilot 216 and a flange 218 for locating the input portion 175 radially and axially on the output portion 176 of the drive train housing, when the pilot 216 on the input portion 175 is inserted into the input end of the output portion 176 of the drive train housing, with the flange 218 of the input portion 175 resting against the end of the output portion 176 of the drive train housing. The flange 218 of the input portion 175 of the drive train housing also includes a pair of holes 222 for receiving locator pins 220 extending from the output portion 176 of the drive train housing, to provide angular location of the input portion 175 with respect to the output portion 176 of the gear train housing.

The flange 218 of the input portion 175 of the drive train housing further includes a pair of radially outwardly opening screw tabs 224, which are aligned with corresponding screw passage channels 226 in the output portion of the drive train housing, when the input portion 175 is properly inserted into the output portion 176 of the drive train housing. The screw tabs 224 and screw passages 226 work in combination with other features of the invention, in a manner described in greater detail below, to allow the valve cartridge 100 to be held together with only two screws 228, 230, the heads of which are visible in FIG. 2.

As shown in FIGS. 1-3, and 10, the motor 108, drive train 110, and switch 200 are enclosed within an environmental housing having an upper case 232 and a lower case 234 joined to one another by a seal 236.

As shown in FIG. 6, the output end of the output portion 176 of the drive train housing includes a pair of axially projecting switch mounting pins 236 for engaging a pair of mounting holes in the switch 200, to thereby locate the switch 200 with respect to the switch-actuating collar 196 extending from the output of the final stage 174 of the gear train, in the manner illustrated in FIGS. 4 and 8. Three locating pins 238 and a collar 240 also project axially from the output end of the output portion of the drive train housing. These locating pins 238 and collar 240 engage three pilot holes 242, and axially facing interior surface 246 of the lower case 234, as illustrated in FIGS. 3, 8, and 9, to thereby locate the drive train 110 and the motor 108 and switch 200 attached thereto in such a manner that the screw tabs 224 and screw passages 226 of the drive train housing are aligned with a pair of holes 244 and the lowercase 234, for passage therethrough of the screws 228, 230.

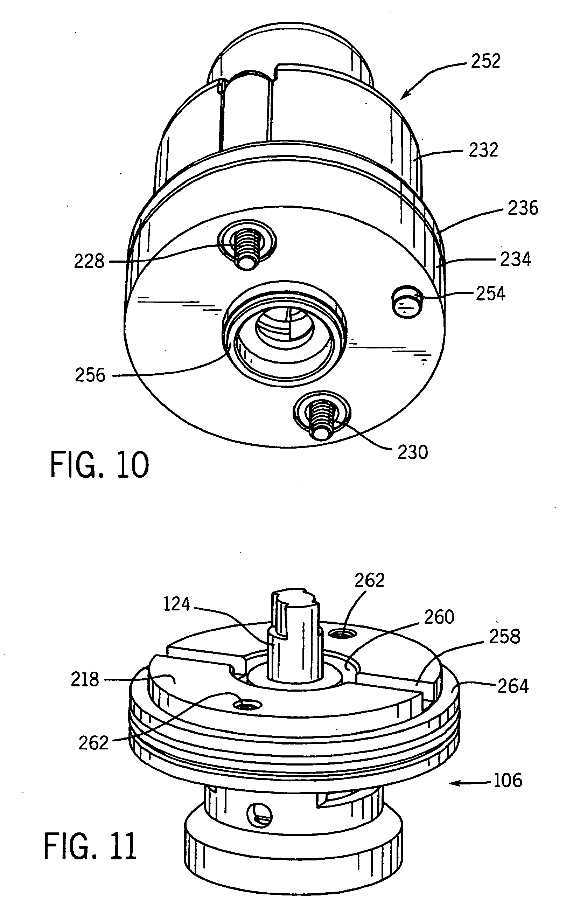

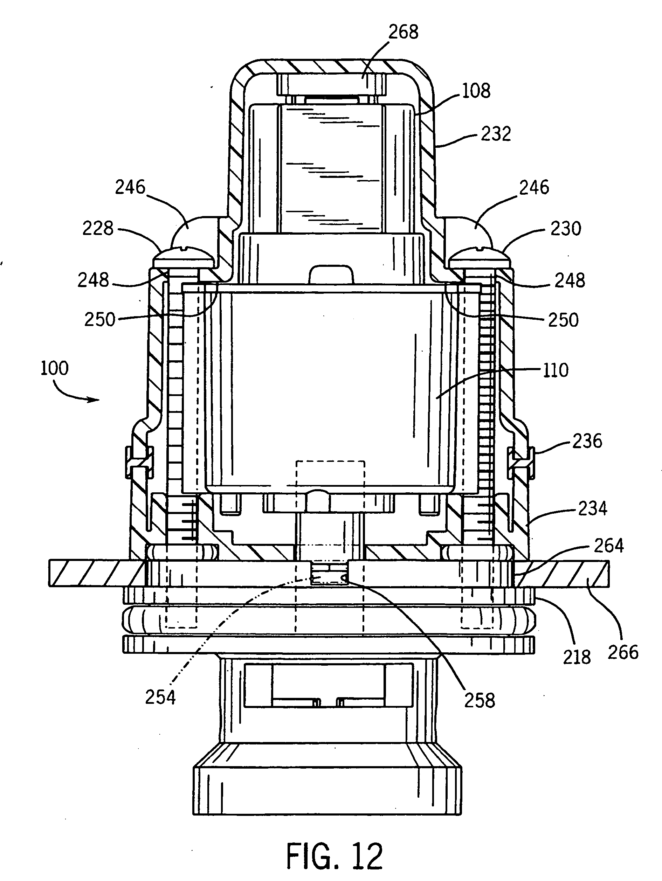

As will be understood from an examination of FIGS. 10 and 12, the upper case 232 includes two screw pockets 246, having holes 248 therein for passage of the screws 228, 230. The screw pockets 246 further define interior surfaces 250 thereof, configured to bear against the screw tabs 224 of the drive train housing when the screws 228, 230 are tightened into place to secure together the components of the valve cartridge 100.

By virtue of the above-described features of the various components of the exemplary embodiment of the valve cartridge 100, it will be appreciated that the motor 108, drive train 110, and switch 200, when installed within the upper and lower cases 232, 234 form a drive module 252, as illustrated in FIG. 10. As will be further appreciated, from an examination of FIGS. 10 and 11, the lower case 234 includes an axially extending locater pin 254 configured to be received respectively in a diametrically extending slot 258 and centrally located recess 260 in the valve housing 218 of the valve assembly 106, in such a manner that when the drive module 252 is installed onto the valve apparatus 106, the threaded ends of the screws 228, 230 extending from the drive module 252 are properly aligned for threaded engagement with a pair of holes 262 in the valve housing 218.

As shown in FIGS. 11 and 12, the valve housing 218 further includes a circular rabbet 264 for engagement with a central hole in a cartridge mounting flange 266, for removably attaching the valve cartridge 100 to the external fluid circuit 104, in the manner illustrated in FIG. 3.

In fabricating the exemplary embodiment of the valve cartridge 100, the valve apparatus 106 and drive module 252 are preferably assembled as separate sub-assemblies. The flange 266 is then positioned in the rabbet 264 of the valve housing 218, and the drive module 252 is slipped over the end of the valve stem 124, and the screws 228, 230 are tightened to join the drive module 252 and valve apparatus 106 into the unitary structure of the valve cartridge 100. As the screws 228, 230 are tightened, the flange 266 is clamped in place between the drive module 252 and the valve housing 218. By virtue of the contact between the inner surfaces 250 of the screw pockets 246 in the upper case 232, and the screw tabs 224 of the input portion 175 of the drive train housing, as the screws 228, 230 are tightened the upper case 232 and drive train 110 are drawn toward the valve housing 218. By virtue of the construction and interaction between the output portion 176 of the drive train 110 and the lower case 234, as the drive train 110 is pulled toward the valve housing 218 by the screws 228, 230, the lower case 234, switch 200, and flange 266 are also clamped into place.

As the screws 228, 230 are tightened to draw together all of the components of the valve cartridge 100, the seal 236, between the upper and lower cases 232, 234 is compressed, to thereby absorb any tolerance stack that might otherwise prevent the screws 228, 230 from properly securing together the various components of the valve cartridge 100.

A compressible pad 268, made of a foam material in the exemplary embodiment, is disposed between the upper case 232 and the distal end of the motor 108, to apply an axially-directed force on the motor 108, to thereby secure the motor within the input portion 175 of the drive train housing. Those having skilled in the art will also appreciate, that in addition to compensating for tolerance stack and applying axially-directed force, the seal 236 and compressible pad 268 serve as vibration dampeners during operation of the valve cartridge 100, to thereby provide for quieter operation.

By virtue of the above description of the exemplary embodiment, those having skilled in the art will appreciate that the invention provides a valve cartridge 100 of unitary construction which may be conveniently installed into and removed from the cavity 102 in the external fluid circuit 104, by guiding the valve cartridge 100 into or out of the cavity 102 along an axis of insertion of the valve cartridge 100, extending out of the cavity 102 from an inlet 270 of the cavity 102 coincident with the axis of rotation 126 of the valve cartridge 100. As shown in FIG. 3, the exemplary embodiment of the valve cartridge 100 is then secured in place by a pair of screws 272 passing through the flange 266 into the portion of the external circuit 104 defining the cavity 102. The inlet seal 152 of the valve cartridge 100, in the exemplary embodiment, is configured to provide a seal with the inlet 270 of the cavity 102. The large O-ring 166 of the valve apparatus 106 of the valve cartridge 100 provides a fluid seal between the valve cartridge 100 and the wall of the cavity 102, such that fluid entering the inlet 114 of the valve cartridge 100 must flow through the seal and regulator disks 120, 122 in traveling between the inlet 270 and the outlet 274 of the cavity 102. In general, it is contemplated that the valve cartridge would be installed and/or removed and replaced as a unit, thereby greatly facilitating initial installation and repair and replacement, as compared to the prior art.

It is further understood, that although the invention has been described herein with reference to certain exemplary embodiments, that the invention may be practiced in many other forms. For example, in other embodiments of the invention, it may be preferable to provide some means other than the flange 266, such as a screw thread, for attachment of the valve cartridge to the external circuit. Depending upon the flow rate requirements of the valve, and torque required for moving the rotatable regulator disk, other embodiments of the invention may include fewer or more planetary gear reduction stages, in embodiments of the invention employing a drive train including a planetary gear train.

Although the exemplary embodiment of the valve cartridge 100 described above is constructed in the form of an on-off valve, in other embodiments of the invention, a valve cartridge, according to the invention, may be configured to provide modulation of a flow of fluid instead of, or in addition to, an on-off control function.

It is contemplated that a motor, in a valve cartridge according to the invention, may take a variety of appropriate forms. In some forms of the invention, the motor may be a DC motor. In other embodiments of the invention, the motor may be an AC motor. A stepper motor may also be utilized, in some forms of the invention.

In alternate embodiments of the invention, position sensing may be accomplished through means other than using a switch 200, as described above with respect to the exemplary embodiment. For example, in some embodiments of the invention, a stepper motor, or a motor having an encoder disk may be utilized to provide position sensing, in accordance with the invention. Other types of mechanical, light-actuated, magnetic, or proximity sensors may be utilized.

It will be further understood, that the direction of fluid flow, and a designation of the inlet 114 and outlets 116, 117 of the exemplary embodiment of the valve cartridge 100 were arbitrarily selected, and maintained consistent throughout the description above, to facilitate understanding of the invention. In other embodiments of the invention, the direction of flow may be opposite from that described above and in the drawings, such that for the exemplary embodiment of the valve cartridge 100, for example fluid would enter the valve cartridge 100 through the ports 116, 117 identified above as the outlets, for purposes of description, and exit the port 114, which was identified above as the inlet, for purposes of description. Stated another way, it is understood that the terms "inlet" and "outlet" of a valve cartridge, according to the invention, may be reversed in practicing the invention, or in the interpretation of the claims appended hereto.

It is also contemplated, that a valve cartridge, in accordance with the invention, may be utilized for fluids other than water, and in applications other than those specifically described herein.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law.

### List of Reference Numbers

- 100: valve cartridge
- 102: cavity
- 104: fluid circuit
- 106: valve apparatus
- 108: motor
- 110: drive train
- 112: wetted portion
- 114: fluid inlet
- 116: fluid outlet
- 117: fluid outlet
- 118: valve housing
- 120: seal disk
- 122: regulator disk
- 124: valve stem
- 126: axis of rotation
- 128: first end
- 130: blade
- 132: blade
- 134: slot
- 136: second end
- 138: central bore
- 139: thrust washer
- 140: metal washer
- 142: o-ring
- 144: o-ring
- 146: lug
- 148: lug
- 150: slot
- 152: seal
- 154: sealing surface
- 156: sealing surface
- 158: fluid passage
- 160: fluid passage
- 162: fluid passage
- 164: fluid passage
- 166: o-ring seal
- 168: groove
- 170: stage
- 172: stage
- 174: stage
- 175: input portion
- 176: drive train housing
- 178: input pinion
- 180: input pinion
- 182: input pinion
- 184: planet gears
- 186: planet carrier
- 188: planet carrier
- 190: output shaft
- 192: planet carrier
- 194: receptacle
- 196: collar
- 198: outer surface
- 200: switch
- 202: arrow
- 204: ramp
- 206: ring gear
- 208: bore
- 210: pilot
- 212: shoulder
- 214: end surface
- 216: pilot
- 218: valve housing
- 220: pin
- 222: hole
- 224: tab
- 226: screw passage channel
- 228: screw
- 230: screw
- 232: upper case
- 234: lower case
- 236: seal
- 238: pin
- 240: collar
- 242: pilot holes
- 244: holes
- 246: interior surface
- 248: holes
- 250: interior surfaces
- 252: drive module
- 254: locator pin
- 256: collar
- 258: slot
- 260: recess
- 262: holes
- 264: circular rabbet
- 266: flange
- 268: compressible pad
- 270: inlet
- 272: screws
- 274: outlet

## Claims

1. A motor-driven hydraulic valve cartridge, for controlling a flow of fluid through a cavity (102) in a fluid circuit external to the valve cartridge (100), the valve cartridge (100) comprising:
a valve apparatus (106) and a motor joined into a unitary structure adapted for removable attachment to the external fluid circuit (104);
the unitary structure having a wetted portion (112) thereof including a fluid inlet (114)and a fluid outlet (116, 117) of the valve cartridge (100), with the wetted portion (112) partially defining the cavity (102) when the valve cartridge (100) is attached to the external fluid circuit (104);
the valve apparatus (106) having a rotatable element (122)for controlling fluid flow between the inlet (114) and the outlet (116, 117) of the valve cartridge (100); and
the motor (108) being fixedly attached to the valve apparatus (106) and operatively connected to the rotatable element (122) of the valve apparatus (106) for selectively controlling a flow of fluid from the inlet (114) to the outlet (116, 117) of the valve cartridge (100).

2. A valve cartridge as defined in Claim 1, wherein the wetted portion (112) extends into the cavity (102) when the valve cartridge (100) is attached to the external fluid circuit (104).

3. A valve cartridge as defined in Claim 1 or 2, further comprising a cavity seal element (166) for sealing an interface between the cavity (102) and the valve cartridge (100).

4. A valve cartridge as defined in anyone of Claims 1-3, wherein the cavity (102) includes an inlet (270) thereto disposed within the cavity (102), and the valve cartridge (100) further comprises an inlet seal (152) for sealing an interface between the inlet (270) to the cavity (102) and the inlet (270) to the valve cartridge (100).

5. A valve cartridge as defined in anyone of Claims 1-4, wherein the outlet (116, 117) of the valve cartridge (100) is in fluid communication with the cavity (102) when the wetted portion (112) of the valve cartridge (100) is installed in the cavity (102) of the external fluid circuit (104).

6. A valve cartridge as defined in Claim 4, wherein the cavity (102) defines an axis of insertion (126) of the valve cartridge (100) into the cavity (102) extending out of the cavity (102), and the inlet (270) of the valve cartridge (100) is aligned for sealing engagement with the inlet of the cavity (102) when the wetted portion (112) of the valve cartridge (100) is inserted into the cavity (102) along the axis of insertion (126).

7. A valve cartridge as defined in anyone of Claims 1-6, wherein the valve apparatus (106) further comprises a stationary seal disk (120), and a mating rotatable regulator disk (122) operatively connected to the motor (108) to be selectively rotated thereby, for controlling a flow of fluid from the inlet to the outlet of the valve cartridge (100).

8. A valve cartridge as defined in Claim 7, wherein at least one of the seal disk (120) and the regulator disk (122) comprises a ceramic material.

9. A valve cartridge as defined in Claim 7 or 8, further comprising a position detector (200) for determining a rotational position of the regulator disk (122).

10. A valve cartridge as defined in anyone Claims 7-9, wherein the valve apparatus (106) further comprises a valve housing (118) defining the fluid inlet (114) and the fluid outlet (116,117) of the valve cartridge (100), an axis of rotation (126) of the regulator disk (122), and having an outer surface thereof defining the wetted portion (112) of the valve cartridge (100).

11. A valve cartridge as defined in any one of Claims 7-10, wherein:
the seal disk (120) is fixedly attached to the valve housing (118), and the regulator disk (122) is operatively connected to the motor (108) to be rotatable thereby about the axis of rotation (126) of the regulator disk (122);
the seal disk (120) and regulator disk (122) define corresponding mating sealing surfaces (154, 156) thereof for providing a sealed interface between the sealing surfaces; and
the seal disk (120) and regulator disk (122) each further define respective fluid passages (160-164) therethrough which are alignable, through selective rotation of the regulator disk (122) by the motor (108), to form a fluid flow path through the seal (120) and regulator disks (122) from the inlet (114) to the outlet (116, 117) of the valve cartridge (100).

12. A valve cartridge as defined in claim 1, wherein the valve apparatus (106) including a valve housing (118), a seal disk (120), and a rotatable regulator disk (122);
the valve housing (118), defining the fluid inlet (114) and the fluid outlet (116, 117) of the valve cartridge (100), an axis of rotation (126) of the regulator disk (122), and the wetted portion (112) of the valve cartridge (100);
the seal disk (120) being fixedly attached to the valve housing (118), and the regulator disk (122) being operatively connected to the motor (108) to be rotatable thereby about the axis of rotation (126);
the seal disk (120) and regulator disk (122) defining corresponding mating sealing (154, 156) surfaces thereof for providing a sealed interface between the sealing surfaces;
the seal disk (120) and regulator disk (122) each further defining respective fluid passages (160-164) therethrough which are alignable, through selective rotation of the seal disk (120) by the motor (108), to form a fluid flow path through the seal (120) and regulator disks (122) from the inlet (114) to the outlet (116, 117) of the valve cartridge (100).

13. A valve cartridge as defined in any one of Claims 7-12, wherein the valve apparatus (106) also comprises a valve stem (124) extending along the axis of rotation (126) of the regulator disk (122) and operatively attached between the motor (108) and the regulator disk (122) in such a manner that the motor (108) may rotate the regulator disk (122).

14. A valve cartridge as defined in Claim 13, further comprising, a drive train (110) operatively disposed between the motor (108) and the valve stem (124), the drive train (110) having an input and an output thereof, the input being attached to the motor (108) to be rotated thereby and the output being attached to the valve stem (124).

15. A valve cartridge as defined in Claim 14, wherein the valve apparatus (106) provides a fluid tight seal between the drive train (110) and the cavity (102) in the external fluid circuit.

16. The valve cartridge as defined in any one of claims 13-15, wherein the valve stem (124) comprises a first end (128) thereof drivingly attached to the regulator disk (122) and a second end (136) thereof extending through and beyond the valve housing (118) for operative drivable connection to the motor (108).

17. A valve cartridge as defined in claim 1, wherein the valve apparatus (106) further comprises a stationary seal disk (120), and a mating rotatable regulator disk (122);
the rotatable regulator disk (122) being operatively connected to the motor (108) by a drive train (110), and selectively rotatable by the motor (108), for controlling a flow of fluid from the inlet (114) to the outlet (116, 117) of the valve cartridge (100).

18. A valve cartridge as defined in Claim 17, wherein at least one of the seal disk (120) and the regulator disk (122) comprises a ceramic material.

19. A valve cartridge as defined in Claim 17 or 18, wherein the valve apparatus (106) provides a fluid tight seal between the drive train (110) and the cavity (102) in the external fluid circuit (104).

20. A valve cartridge as defined in any one of Claims 17-19, further comprising, a drive train support attaching the drive train (110) to the valve housing (234).

21. A valve cartridge as defined in any one of Claims 17-20, wherein the motor (108) is attached to the drive train support structure.

22. A valve cartridge as defined in any one of Claims 17-21, wherein, the drive train (110) comprises a gear train.

23. A valve cartridge as defined in Claim 22, wherein, the gear train (110) comprises one or more planetary gear reduction stages (170, 172, 174), with each planetary gear reduction stage (170, 172, 174) having an input pinion (178, 180, 182) driving one or more planetary gears operatively mounted on a planet carrier (186, 188, 192), and the planet carrier (186, 188, 192) of each one of the one or more planetary gear reduction stages (170, 172, 174) providing an output of that one of the one or more planetary gear reduction stages (170, 172, 174).

24. A valve cartridge as defined in Claim 23, wherein, the input pinion (178) of the first stage (170) of the gear train (110) is attached directly to the motor (108), to be driven thereby.

25. A valve cartridge as defined in Claim 23 or 24, wherein:
the regulator disk (122) is rotatable about an axis of rotation (126) of the regulator disk (122); and
the gear train (110) includes two or more planetary gear reduction stages (170, 172, 174) having their input planets and outputs concentrically aligned about the axis of rotation (126) of the regulator disk (122).

26. A valve cartridge as defined in Claim 25, wherein the two or more planetary gear reduction stages (170, 172, 174) are axially disposed from one another along the axis of rotation (126) of the regulator disk (122), with the output of one of the two or more planetary gear reduction stages (170, 172, 174) forming the input pinion of the second one (172) of the two or more planetary gear reduction stages (170, 172, 174).

27. A valve cartridge as defined in Claim 25 or 26, wherein:
the two or more planetary gear stages (170, 172, 174) are operatively connected in a series relationship, with one of one of the two or more planetary gear stages (170, 172, 174) forming a first stage (170) of the gear train, and another one of the two or more planetary gear stages forming a final stage (174) of the gear train; and
the output of the final stage (174) of the gear train is operatively attached to the regulator disk (122) in such a manner that rotation of the input pinion (180) of the first stage (170) results in the output of the final stage (174) rotating the regulator disk (122).

28. A valve cartridge as defined in any one of Claims 25-27, wherein the gear train further includes a drive train housing (176) disposed about the multiple planetary gear reduction stages (170, 172, 174) and having an internal surface thereof configured to form a common stationary ring gear (206) in gear mesh relationship with the planet gears of all of the planetary gear reduction stages (170, 172, 174), to thereby operatively connect the multiple planetary gear reduction stages (170, 172, 174) to one another in a series gear train relationship extending from the first (170) to the final stage (174) of the gear train.

29. A valve cartridge as defined in Claim 28, further comprising a position detector (200) operatively linked to the output of the final stage (174), to thereby detect an angular position of the output of the final stage (174) about the axis of rotation (126) of the regulating disk (122).

30. A valve cartridge as defined in Claim 29, wherein the output of the final stage (174) includes one or more surface features (196, 198) thereof having a configuration that is detectable by the position detector (200).

31. A valve cartridge as defined in Claim 27, further comprising, a position detector (200) operatively linked to the output of the final stage (174), to thereby detect an angular position of the regulating disk (122) about the axis of rotation (126) of the regulating disk (122).

32. A valve cartridge as defined in Claim 31, wherein the valve apparatus (106) further comprises a valve stem (124) extending along the axis of rotation (126) of the regulating disk (122), the valve stem (124) having a first end (124) thereof drivingly attached to the regulating disk (122) and a second end (136) thereof drivably connected to the output of the final stage (174) of the planetary gear train (110).

33. A valve cartridge as defined in claim 1, wherein the valve apparatus (106) including a valve housing (118), a seal disk (120), a rotatable regulator disk (122), and a valve stem (124);
the valve housing (118), defining the fluid inlet (114) and the fluid outlet (116, 117) of the valve cartridge (100), an axis of rotation (126) of the regulator disk (122), and the wetted portion (112) of the valve cartridge (100);
the valve stem (124) extending along the axis of rotation (126) of the regulating disk (122), with the valve stem (124) having a first end (124) thereof drivingly attached to the regulating disk (122) and a second end (136) thereof extending through and beyond the valve housing (118) for operative drivable connection drive train (170, 172, 174);
the drive train (110) comprising a gear train including multiple planetary gear reduction stages (170, 172, 174), including at least a first and a final planetary gear reduction stage (170, 174), with each planetary gear reduction stage having an input pinion (178, 180, 182) driving one or more planetary gears operatively mounted on a planet carrier (186, 188, 192), and the planet carrier (186, 188, 192) of each one of the multiple planetary gear reduction stages (170, 172, 174) providing an output of that one of the multiple planetary gear reduction stages (170, 172, 174);
the multiple planetary gear reduction stages (170, 172, 174) of the planetary gear train (110) being axially disposed from one another along the axis of rotation (126) of the regulator disk (122), with the output of all but the final stage (174) of the planetary gear train forming the input pinion (178, 180, 182) of an adjacent stage of the planetary gear train (110), the input pinions (178, 180, 182) and outputs of all stages of the planetary gear train (110) being concentrically aligned about the axis of rotation (126) of the regulator disk (122), and the input pinion (178) of the first stage (170) of the gear train (110) being attached directly to the motor (108), to be driven thereby;
the gear train (110) further including a drive train housing (176) disposed about the multiple planetary gear reduction stages (170, 172, 174) and having an internal surface thereof configured to form a common stationary ring gear (206) in gear mesh relationship with the planet gears of all of the planetary gear reduction stages (170, 172, 174), to thereby operatively connect the multiple planetary gear reduction stages (170, 172, 174) to one another in a series gear train relationship extending from the first (170) to the final stage (174) of the gear train (110);
the output of the final stage (174) of the gear train being operatively attached to the second end (136) of the valve stem (124) in such a manner that rotation of the input pinion (178) of the first stage (170) by the motor (108) results in the output of the final stage (174) rotating the regulator disk (122);
the seal disk (120) being fixedly attached to the valve housing (118);
the seal disk (120) and regulator disk (122) defining corresponding mating sealing surfaces (154, 156) thereof for providing a sealed interface between the sealing surfaces (154, 156);
the seal disk (120) and regulator disk (122) each further defining respective fluid passages (158, 160, 162, 164) therethrough which are alignable, through selective rotation of the regulator disk (122) by the motor (108), to form a fluid flow path through the seal (120) and regulator disks (122) from the inlet (114) to the outlet (116, 117) of the valve cartridge (100).

34. A valve cartridge as defined in Claim 33, wherein at least one of the seal disk (120) and the regulator disk (122) comprises a ceramic material.

35. A valve cartridge as defined in Claim 33 or 34, wherein the valve apparatus (106) provides a fluid tight seal (152) between the drive train (110) and the cavity (102) in the external fluid circuit.

36. A valve cartridge as defined in any one of Claims 33-35, wherein, the drive train support structure is attached to the valve housing (118), and the motor (108) is attached to the drive train support structure.

37. A method of constructing a motor-driven hydraulic valve cartridge (100), for controlling a flow of fluid through a cavity (102) in a fluid circuit external to the valve cartridge (100), the method comprising:
joining a valve apparatus (106) and a motor (108) into a unitary structure adapted for removable attachment to the external fluid circuit;
the unitary structure having a wetted portion (112) thereof including a fluid inlet (114) and a fluid outlet (116, 117) of the valve cartridge (100), with the wetted portion (112) partially defining the cavity (102) when the valve cartridge (100)is attached to the external fluid circuit;
the valve apparatus (100) having a rotatable element (122) for controlling fluid flow between the inlet (114) and the outlet (116, 117) of the valve cartridge (100); and
the motor (108) being fixedly attached to the valve apparatus (106) and operatively connected to the rotatable element (122) of the valve apparatus (106) for selectively controlling a flow of fluid from the inlet (114) to the outlet (116, 117) of the valve cartridge (100).

38. A method as disclosed in Claim 37, further comprising, operatively connecting the motor (108) to the rotatable element (122) with a planetary reduction gear train (110).

39. A method as disclosed in Claim 36 or 37, further comprising attaching the valve cartridge (100) to the external fluid circuit with at least a portion (112) of the wetted portion (112) extending into the cavity (102).

## Patentansprüche

1. Motorgetriebene Hydraulikventilpatrone zur Steuerung eines Fluidstroms durch einen Hohlraum (102) in einem Fluidkreislauf außerhalb der Ventilpatrone (100), wobei die Ventilpatrone (100) Folgendes umfasst:
eine Ventilvorrichtung (106) und einen Motor, die zu einer einteiligen Struktur verbunden sind, welche zur lösbaren Befestigung an dem äußeren Fluidkreislauf (104) ausgeführt ist;
wobei die einteilige Struktur einen benetzten Teil (112) aufweist, der einen Fluideinlass (114) und einen Fluidauslass (116, 117) der Ventilpatrone (100) enthält, wobei der benetzte Teil (112) teilweise den Hohlraum (102) definiert, wenn die Ventilpatrone (100) an dem äußeren Fluidkreislauf (104) befestigt ist;
wobei die Ventilvorrichtung (106) ein drehbares Element (122) zur Steuerung von Fluidstrom zwischen dem Einlass (114) und dem Auslass (116, 117) der Ventilpatrone (100) aufweist; und
wobei der Motor (108) fest an der Ventilvorrichtung (106) angebracht ist und mit dem drehbaren Element (122) der Ventilvorrichtung (106) zur gezielten Steuerung eines Fluidstroms von dem Einlass (114) zu dem Auslass (116, 117) der Ventilpatrone (100) wirkverbunden ist.

2. Ventilpatrone nach Anspruch 1, wobei sich der benetzte Teil (112) in den Hohlraum (102) erstreckt, wenn die Ventilpatrone (100) an dem äußeren Fluidkreislauf (104) befestigt ist.

3. Ventilpatrone nach Anspruch 1 oder 2, die weiterhin ein Hohlraumdichtungselement (166) zur Abdichtung einer Grenzfläche zwischen dem Hohlraum (102) und der Ventilpatrone (100) umfasst.

4. Ventilpatrone nach einem der Ansprüche 1 - 3, wobei der Hohlraum (102) einen Einlass (270) enthält, der in dem Hohlraum (102) angeordnet ist, und die Ventilpatrone (100) weiterhin eine Einlassdichtung (152) zur Abdichtung einer Grenzfläche zwischen dem Einlass (270) zum Hohlraum (102) und dem Einlass (270) zur Ventilpatrone (100) umfasst.

5. Ventilpatrone nach einem der Ansprüche 1 - 4, wobei der Auslass (116, 117) der Ventilpatrone (100) mit dem Hohlraum (102) in Strömungsverbindung steht, wenn der benetzte Teil (112) der Ventilpatrone (100) in dem Hohlraum (102) des äußeren Fluidkreislaufs (104) installiert ist.

6. Ventilpatrone nach Anspruch 4, wobei der Hohlraum (102) eine Achse der Einführung (126) der Ventilpatrone (100) in den Hohlraum (102) definiert, die sich aus dem Hohlraum (102) heraus erstreckt, und der Einlass (270) der Ventilpatrone (100) zum Dichtungseingriff mit dem Einlass des Hohlraums (102) ausgerichtet ist, wenn der benetzte Teil (112) der Ventilpatrone (100) entlang der Einführachse (126) in den Hohlraum (102) eingeführt wird.

7. Ventilpatrone nach einem der Ansprüche 1 - 6, wobei die Ventilvorrichtung (106) weiterhin einen stationären Dichtungsteller (120) und einen drehbaren Pass-Regelteller (122) umfasst, der mit dem Motor (108) wirkverbunden ist, um dadurch zwecks Steuerung eines Fluidstroms von dem Einlass zu dem Auslass der Ventilpatrone (100) gezielt gedreht zu werden.

8. Ventilpatrone nach Anspruch 7, wobei der Dichtungsteller (120) und/oder der Regelteller (122) ein Keramikmaterial umfasst.

9. Ventilpatrone nach Anspruch 7 oder 8, die weiterhin einen Positionsgeber (200) zur Bestimmung einer Drehposition des Regeltellers (122) umfasst.

10. Ventilpatrone nach einem der Ansprüche 7 - 8, wobei die Ventilvorrichtung (106) weiterhin ein Ventilgehäuse (118) umfasst, das den Fluideinlass (114) und den Fluidauslass (116, 117) der Ventilpatrone (100) und eine Drehachse (126) des Regeltellers (122) definiert und das eine Außenfläche aufweist, die den benetzten Teil (112) der Ventilpatrone (100) definiert.

11. Ventilpatrone nach einem der Ansprüche 7 - 10, wobei:
der Dichtungsteller (120) fest an dem Ventilgehäuse (118) angebracht ist und der Regelteller (122) mit dem Motor (108) wirkverbunden ist, um von diesem um die Drehachse (126) des Regeltellers (122) gedreht zu werden;
der Dichtungsteller (120) und der Regelteller (122) entsprechende Pass-Dichtungsflächen (154, 156) definieren, um eine abgedichtete Grenzfläche zwischen den Dichtungsflächen bereitzustellen; und der Dichtungsteller (120) und der Regelteller (122) jeweils weiterhin jeweilige Fluiddurchgänge (160 - 164) dadurch definieren, die durch gezielte Drehung des Regeltellers (122) durch den Motor (108) aufeinander ausgerichtet werden können, um einen Fluidstromweg durch den Dichtungsteller (120) und den Regelteller (122) von dem Einlass (114) zu dem Auslass (116, 117) der Ventilpatrone (100) zu bilden.

12. Ventilpatrone nach Anspruch 1, wobei die Ventilvorrichtung (106) ein Ventilgehäuse (118), einen Dichtungsteller (120) und einen drehbaren Regelteller (122) enthält;
wobei das Ventilgehäuse (118) den Fluideinlass (114) und den Fluidauslass (116, 117) der Ventilpatrone (100), eine Drehachse (126) des Regeltellers (122) und den benetzten Teil (112) der Ventilpatrone (100) definiert;
wobei der Dichtungsteller (120) fest an dem Ventilgehäuse (118) angebracht ist und der Regelteller (122) mit dem Motor (108) wirkverbunden ist, um von ihm um die Drehachse (126) gedreht zu werden;
wobei der Dichtungsteller (120) und der Regelteller (122) entsprechende Pass-Dichtungsflächen (154, 156) davon definieren, um eine abgedichtete Grenzfläche zwischen den Dichtungsflächen bereitzustellen; und
der Dichtungsteller (120) und der Regelteller (122) jeweils weiterhin jeweilige Fluiddurchgänge (160 - 164) dadurch definieren, die durch gezielte Drehung des Reglertellers (122) durch den Motor (108) aufeinander ausgerichtet werden können, um einen Fluidstromweg durch den Dichtungsteller (120) und den Regelteller (122) von dem Einlass (114) zu dem Auslass (116, 117) der Ventilpatrone (100) zu bilden.

13. Ventilpatrone nach einem der Ansprüche 7 bis 12,
wobei die Ventilvorrichtung (106) weiterhin einen Ventilschaft (124) umfasst, der sich entlang der Drehachse (126) des Regeltellers (122) erstreckt und zwischen dem Motor (108) und dem Regelteller (122) so wirkbefestigt ist, dass der Motor (108) den Regelteller (122) drehen kann.

14. Ventilpatrone nach Anspruch 13, die weiterhin einen Antriebsstrang (110) umfasst, der zwischen dem Motor (108) und dem Ventilschaft (124) wirkverbunden ist, wobei der Antriebsstrang (110) einen Einlass und einen Auslass davon aufweist, wobei der Eingang an dem Motor (108) zur Drehung dadurch befestigt ist und der Auslass an dem Ventilschaft (124) befestigt ist.

15. Ventilpatrone nach Anspruch 14, wobei die Ventilvorrichtung (106) eine fluiddichte Dichtung zwischen dem Antriebsstrang (110) und dem Hohlraum (102) im äußeren Fluidkreislauf bereitstellt.

16. Ventilpatrone nach einem der Ansprüche 13 - 15, wobei der Ventilschaft (124) ein erstes Ende (128), das an dem Regelteller (122) antriebsbefestigt ist, und ein zweites Ende (136), das sich für eine antreibbare Wirkverbindung mit dem Motor (108) durch das Ventilgehäuse (118) und darüber hinaus erstreckt, umfasst.

17. Ventilpatrone nach Anspruch 1, wobei die Ventilvorrichtung (106) weiterhin einen stationären Dichtungsteller (120) und einen drehbaren Pass-Regelteller (122) umfasst, wobei der drehbare Regelteller (122) durch einen Antriebsstrang (110) mit dem Motor (108) wirkverbunden ist und zwecks Steuerung eines Fluidstroms von dem Einlass (114) zu dem Auslass (116, 117) der Ventilpatrone (100) durch den Motor (108) gezielt drehbar ist.

18. Ventilpatrone nach Anspruch 17, wobei der Dichtungsteller (120) und/oder der Regelteller (122) ein Keramikmaterial umfasst.

19. Ventilpatrone nach Anspruch 17 oder 18, wobei die Ventilvorrichtung (106) eine fluiddichte Dichtung zwischen dem Antriebsstrang (110) und dem Hohlraum (102) in dem äußeren Fluidkreislauf (104) bereitstellt.

20. Ventilpatrone nach einem der Ansprüche 17 - 19, die weiterhin einen Antriebsstrangträger umfasst, der den Antriebsstrang (110) an dem Ventilgehäuse (234) befestigt.

21. Ventilpatrone nach einem der Ansprüche 17 - 20, wobei der Motor (108) an dem Antriebsstrangträger befestigt ist.

22. Ventilpatrone nach einem der Ansprüche 17 - 21, wobei der Antriebsstrang (110) einen Getriebezug umfasst.

23. Ventilpatrone nach Anspruch 22, wobei der Getriebezug (110) eine oder mehrere Planetengetriebeuntersetzungsstufen (170, 172, 174) umfasst, wobei jede Planetengetriebeuntersetzungsstufe (170, 172, 174) ein Eingangsritzel (178, 180, 82) aufweist, das ein oder mehrere auf einem Planetenradträger (186, 188, 192) wirkangebrachte Planetenräder antreibt, und der Planetenradträger (186, 188, 192) jeder der einen oder mehreren Planetengetriebeuntersetzungsstufen (170, 172, 174) einen Ausgang der einen oder mehreren Planetengetriebeuntersetzungsstufen (170, 172, 174) bildet.

24. Ventilpatrone nach Anspruch 23, wobei das Eingangsritzel (178) der ersten Stufe (170) des Getriebezuges (110) direkt an dem Motor (108) befestigt ist, um von ihm angetrieben zu werden.

25. Ventilpatrone nach Anspruch 23 oder 24, wobei:
der Regelteller (122) um eine Drehachse (126) des Regeltellers (122) drehbar ist; und
der Getriebezug (110) zwei oder mehr Planetengetriebeuntersetzungsstufen (170, 172, 174) enthält, deren Eingangsplanetenräder und Ausgänge konzentrisch um die Drehachse (126) des Regeltellers (122) ausgerichtet sind.

26. Ventilpatrone nach Anspruch 25, wobei die zwei oder mehr Planetengetriebeuntersetzungsstufen (170, 172, 174) entlang der Drehachse (126) des Regeltellers (122) axial voneinander angeordnet sind, wobei der Ausgang einer der zwei oder mehr Planetengetriebeuntersetzungsstufen (170, 172, 174) das Eingangsritzel der zweiten (172) der zwei oder mehr Planetengetriebeuntersetzungsstufen (170, 172, 174) bildet.

27. Ventilpatrone nach Anspruch 25 oder 26, wobei:
die zwei oder mehr Planetengetriebeuntersetzungsstufen (170, 172, 174) in einer Reihenbeziehung wirkverbunden sind, wobei eine der zwei oder mehr Planetengetriebeuntersetzungsstufen (170, 172, 174) eine erste Stufe (170) des Getriebezuges bildet und eine andere der zwei oder mehr Planetengetriebeuntersetzungsstufen eine Endstufe (174) des Getriebezuges bildet; und
der Ausgang der Endstufe (174) des Getriebezuges an dem Regelteller (122) so wirkbefestigt ist, dass Drehung des Eingangsritzels (180) der ersten Stufe (170) dazu führt, dass der Ausgang der Endstufe (174) den Regelteller (122) dreht.

28. Ventilpatrone nach einem der Ansprüche 25 - 27, wobei der Getriebezug weiterhin ein Antriebsstranggehäuse (176) enthält, das um die mehreren Planetengetriebeuntersetzungsstufen (170, 172, 174) angeordnet ist und eine Innenfläche aufweist, die dazu konfiguriert ist, ein gemeinsames stationäres Hohlrad (206) in Zahneingriffsbeziehung zu den Planetenrädern aller der Planetengetriebeuntersetzungsstufen (170, 172, 174) zu bilden, um dadurch die mehreren Planetengetriebeuntersetzungsstufen (170, 172, 174) in einer Reihengetriebezugbeziehung, die von der ersten Stufe (170) bis zur Endstufe (174) des Getriebezuges verläuft, miteinander wirkzuverbinden.

29. Ventilpatrone nach Anspruch 28, die weiterhin einen Positionsgeber (200) umfasst, der mit dem Ausgang der Endstufe (174) wirkverbunden ist, um dadurch eine Winkelposition des Ausgangs der Endstufe (174) um die Drehachse (126) des Regeltellers (122) zu erkennen.

30. Ventilpatrone nach Anspruch 29, wobei der Ausgang der Endstufe (174) ein oder mehrere Flächenmerkmale (196, 198) enthält, die eine durch den Positionsgeber (200) erkennbare Konfiguration aufweisen.

31. Ventilpatrone nach Anspruch 27, die weiterhin einen Positionsgeber (200) umfasst, der mit dem Ausgang der Endstufe (174) wirkverbunden ist, um dadurch eine Winkelposition des Regeltellers (122) um die Drehachse (126) des Regeltellers (122) zu erkennen.

32. Ventilpatrone nach Anspruch 31, wobei die Ventilvorrichtung (106) weiterhin einen Ventilschaft (124) umfasst, der sich entlang der Drehachse (126) des Regeltellers (122) erstreckt, wobei der Ventilschaft (124) ein erstes Ende (128), das an dem Regelteller (122) antriebsbefestigt ist, und ein zweites Ende (136), das mit dem Ausgang der Endstufe (174) des Planetengetriebezuges (110) antriebsverbunden ist, aufweist.

33. Ventilpatrone nach Anspruch 1, wobei die Ventilvorrichtung (106) ein Ventilgehäuse (118), einen Dichtungsteller (120), einen drehbaren Regelteller (122) und einen Ventilschaft (124) enthält;
wobei das Ventilgehäuse (118) den Fluideinlass (114) und den Fluidauslass (116, 117) der Ventilpatrone (100), eine Drehachse (126) des Regeltellers (122) und den benetzten Teil (112) der Ventilpatrone (100) definiert;
wobei sich der Ventilschaft (124) entlang der Drehachse (126) des Regeltellers (122) erstreckt, wobei der Ventilschaft (124) ein erstes Ende (128), das an dem Regelteller (122) antriebsbefestigt ist, und ein zweites Ende (136), das sich für einen antreibbaren Wirkverbindungsantriebsstrang (170, 172, 164) durch das Ventilgehäuse (118) und darüber hinaus erstreckt, aufweist;
wobei der Antriebsstrang (110) einen Getriebezug umfasst, der mehrere Planetengetriebeuntersetzungsstufen (170, 172, 174) umfasst, die mindestens eine erste und eine Endplanetengetriebeuntersetzungsstufe (170, 174) enthalten, wobei jede Planetengetriebeuntersetzungsstufe ein Eingangsritzel (178, 180, 182) aufweist, das ein oder mehrere Planetenräder antreibt, die auf einem Planetenradträger (186, 188, 192) wirkangebracht sind, und der Planetenradträger (186, 188, 192) jeder einzelnen der mehreren Planetengetriebeuntersetzungsstufen (170, 172, 174) einen Ausgang der einen der mehreren Planetengetriebeuntersetzungsstufen (170, 172, 174) bildet;
wobei die mehreren Planetengetriebeuntersetzungsstufen (170, 172, 174) des Planetengetriebezuges (110) entlang der Drehachse (126) des Regeltellers (122) axial voneinander angeordnet sind, wobei der Ausgang aller mit Ausnahme der Endstufe (174) des Planetengetriebezuges das Eingangsritzel (178, 180, 182) einer benachbarten Stufe des Planetengetriebezuges (110) bildet, wobei die Eingangsritzel (178, 180, 182) und Ausgänge aller Stufen des Planetengetriebezuges (110) konzentrisch um die Drehachse (126) des Regeltellers (122) ausgerichtet sind und das Eingangsritzel (178) der ersten Stufe (170) des Getriebezuges (110) direkt an dem Motor (108) befestigt ist, um von diesem angetrieben zu werden;
wobei der Getriebezug (110) weiterhin ein Antriebsstranggehäuse (176) enthält, das um die mehreren Planetengetriebeuntersetzungsstufen (170, 172, 174) angeordnet ist und eine Innenfläche aufweist, die dazu konfiguriert ist, ein gemeinsames stationäres Hohlrad (206) in Zahneingriffsbeziehung zu den Planetenrädern aller der Planetengetriebeuntersetzungsstufen (170, 172, 174) zu bilden, um dadurch die mehreren Planetengetriebeuntersetzungsstufen (170, 172, 174) in einer Reihengetriebezugbeziehung, die von der ersten Stufe (170) bis zur Endstufe (174) des Getriebezuges verläuft, wirkzuverbinden;
wobei der Ausgang der Endstufe (174) des Getriebezuges an dem zweiten Ende (136) des Ventilschafts (124) so wirkbefestigt ist, dass die Drehung des Eingangsritzels (178) der ersten Stufe (170) durch den Motor (108) dazu führt, dass der Ausgang der Endstufe (174) den Regelteller (122) dreht;
wobei der Dichtungsteller (120) fest an dem Ventilgehäuse (118) angebracht ist;
wobei der Dichtungsteller (120) und der Regelteller (122) entsprechende Pass-Dichtungsflächen (154, 156) definieren, um eine abgedichtete Grenzfläche zwischen den Dichtungsflächen (154, 156) bereitzustellen; und
wobei der Dichtungsteller (120) und der Regelteller (122) jeweils weiterhin jeweilige Fluiddurchgänge (158, 160, 162, 164) dadurch definieren, die durch gezielte Drehung des Regeltellers (122) durch den Motor (108) aufeinander ausgerichtet werden können, um einen Fluidstromweg durch den Dichtungsteller (120) und den Regelteller (122) von dem Einlass (114) zu dem Auslass (116, 117) der Ventilpatrone (100) zu bilden.

34. Ventilpatrone nach Anspruch 33, wobei der Dichtungsteller (120) und/oder der Regelteller (122) ein Keramikmaterial umfassen.

35. Ventilpatrone nach Anspruch 33 oder 34, wobei die Ventilvorrichtung (106) eine fluiddichte Dichtung (152) zwischen dem Antriebsstrang (110) und dem Hohlraum (102) im äußeren Fluidkreislauf bereitstellt.

36. Ventilpatrone nach einem der Ansprüche 33 - 35, wobei die Antriebszugträgerstruktur an dem Ventilgehäuse (118) befestigt ist und der Motor (108) an der Antriebszugträgerstruktur befestigt ist.

37. Verfahren zur Herstellung einer motorgetriebenen Hydraulikventilpatrone (100) zur Steuerung eines Fluidstroms durch einen Hohlraum (102) in einem Fluidkreislauf außerhalb der Ventilpatrone (100), wobei das Verfahren Folgendes umfasst:
Verbinden einer Ventilvorrichtung (106) und eines Motors (108) zu einer einteiligen Struktur, welche zur lösbaren Befestigung an dem äußeren Fluidkreislauf ausgeführt ist;
wobei die einteilige Struktur einen benetzten Teil (112) aufweist, der einen Fluideinlass (114) und einen Fluidauslass (116, 117) der Ventilpatrone (100) enthält, wobei der benetzte Teil (112) teilweise den Hohlraum (102) definiert, wenn die Ventilpatrone (100) an dem äußeren Fluidkreislauf befestigt ist;
wobei die Ventilvorrichtung (106) ein drehbares Element (122) zur Steuerung von Fluidstrom zwischen dem Einlass (114) und dem Auslass (116, 117) der Ventilpatrone (100) aufweist; und
wobei der Motor (108) fest an der Ventilvorrichtung (106) angebracht ist und mit dem drehbaren Element (122) der Ventilvorrichtung (106) zur gezielten Steuerung eines Fluidstroms von dem Einlass (114) zu dem Auslass (116, 117) der Ventilpatrone (100) wirkverbunden ist.

38. Verfahren nach Anspruch 37, das weiterhin Wirkverbinden des Motors (108) mit dem drehbaren Element (122) durch einen Planetengetriebeuntersetzungszug (110) umfasst.

39. Verfahren nach Anspruch 36 oder 37, das weiterhin Befestigen der Ventilpatrone (100) an dem äußeren Fluidkreislauf umfasst, wobei sich mindestens ein Teil (112) des benetzten Teils (112) in den Hohlraum (102) erstreckt.

## Revendications

1. Cartouche de valve hydraulique commandée par moteur, pour commander un écoulement de fluide à travers une cavité (102) dans un circuit de fluide externe à la cartouche de valve (100), la cartouche de valve (100) comprenant:
un dispositif de valve (106) et un moteur joints en une structure unitaire adaptée pour être attachée de façon amovible au circuit de fluide externe (104);
la structure unitaire comprenant une partie mouillée (112) qui comprend une entrée de fluide (114) et une sortie de fluide (116, 117) de la cartouche de valve (100), la partie mouillée (112) définissant partiellement la cavité (102) lorsque la cartouche de valve (100) est attachée au circuit de fluide externe (104);
le dispositif de valve (106) comprenant un élément rotatif (122) pour commander l'écoulement de fluide entre l'entrée (114) et la sortie (116, 117) de la cartouche de valve (100); et
le moteur (108) étant attaché fixement au dispositif de valve (106) et connecté de façon opérationnelle à l'élément rotatif (122) du dispositif de valve (106) afin de commander de façon sélective un écoulement de fluide depuis l'entrée (114) jusqu'à la sortie (116, 117) de la cartouche de valve (100).

2. Cartouche de valve selon la revendication 1, dans laquelle la partie mouillée (112) s'étend dans la cavité (102) lorsque la cartouche de valve (100) est attachée au circuit de fluide externe (104).

3. Cartouche de valve selon la revendication 1 ou 2, comprenant en outre un élément de joint de cavité (166) pour isoler une interface entre la cavité (102) et la cartouche de valve (100).

4. Cartouche de valve selon l'une quelconque des revendications 1 à 3, dans laquelle la cavité (102) comprend une entrée (270) disposée à l'intérieur de la cavité (102), et la cartouche de valve (100) comprend en outre un joint d'entrée (152) pour isoler une interface entre l'entrée (270) vers la cavité (102) et l'entrée (270) vers la cartouche de valve (100).

5. Cartouche de valve selon l'une quelconque des revendications 1 à 4, dans laquelle la sortie (116, 117) de la cartouche de valve (100) est en communication fluidique avec la cavité (102) lorsque la partie mouillée (112) de la cartouche de valve (100) est installée dans la cavité (102) du circuit de fluide externe (104).

6. Cartouche de valve selon la revendication 4, dans laquelle la cavité (102) définit un axe d'insertion (126) de la cartouche de valve (100) dans la cavité (102) qui s'étend hors de la cavité (102), et l'entrée (270) de la cartouche de valve (100) est alignée pour réaliser un engagement étanche avec l'entrée de la cavité (102) lorsque la partie mouillée (112) de la cartouche de valve (100) est insérée dans la cavité (102) le long de l'axe d'insertion (126).

7. Cartouche de valve selon l'une quelconque des revendications 1 à 6, dans laquelle le dispositif de valve (106) comprend en outre un disque d'étanchéité stationnaire (120), et un disque de régulateur rotatif conjugué (122) connecté de façon opérationnelle au moteur (108) de manière à être mis en rotation de façon sélective par celui-ci, afin de commander un écoulement de fluide depuis l'entrée jusqu'à la sortie de la cartouche de valve (100).

8. Cartouche de valve selon la revendication 7, dans laquelle au moins un du disque d'étanchéité (120) et du disque de régulateur (122) comprend un matériau céramique.

9. Cartouche de valve selon la revendication 7 ou 8, comprenant en outre un détecteur de position (200) pour déterminer une position de rotation du disque de régulateur (122).

10. Cartouche de valve selon l'une quelconque des revendications 7 à 9, dans laquelle le dispositif de valve (106) comprend en outre un boîtier de valve (118) qui définit l'entrée de fluide (114) et la sortie de fluide (116, 117) de la cartouche de valve (100), un axe de rotation (126) du disque de régulateur (122), et qui comprend une surface extérieure qui définit la partie mouillée (112) de la cartouche de valve (100).

11. Cartouche de valve selon l'une quelconque des revendications 7 à 10, dans laquelle:
le disque d'étanchéité (120) est attaché fixement au boîtier de valve (118), et le disque de régulateur (122) est connecté de façon opérationnelle au moteur (108) de manière à être mis en rotation par celui-ci autour de l'axe de rotation (126) du disque de régulateur (122);
le disque d'étanchéité (120) et le disque de régulateur (122) définissent des surfaces d'étanchéité conjuguées correspondantes (154, 156) pour former une interface étanche entre les surfaces d'étanchéité; et
le disque d'étanchéité (120) et le disque de régulateur (122) définissent en outre chacun des passages de fluide respectifs (160-164) à travers eux qui peuvent être alignés, par l'intermédiaire d'une rotation sélective du disque de régulateur (122) par le moteur (108), afin de former un chemin d'écoulement de fluide à travers les disques d'étanchéité (120) et de régulateur (122) depuis l'entrée (114) jusqu'à la sortie (116, 117) de la cartouche de valve (100).

12. Cartouche de valve selon la revendication 1, dans laquelle le dispositif de valve (106) comprend un boîtier de valve (118), un disque d'étanchéité (120) et un disque de régulateur rotatif (122);
le boîtier de valve (118) définissant l'entrée de fluide (114) et la sortie de fluide (116, 117) de la cartouche de valve (100), un axe de rotation (126) du disque de régulateur (122) et la partie mouillée (112) de la cartouche de valve (100);
le disque d'étanchéité (120) étant attaché fixement au boîtier de valve (118), et le disque de régulateur (122) étant connecté de façon opérationnelle au moteur (108) de manière à être mis en rotation par celui-ci autour de l'axe de rotation (126);
le disque d'étanchéité (120) et le disque de régulateur (122) définissant des surfaces d'étanchéité conjuguées correspondantes (154, 156) pour former une interface d'étanchéité entre les surfaces d'étanchéité;
le disque d'étanchéité (120) et le disque de régulateur (122) définissant en outre chacun des passages de fluide respectifs (160-164) à travers eux qui peuvent être alignés, par l'intermédiaire d'une rotation sélective du disque de régulateur (122) par le moteur (108), afin de former un chemin d'écoulement de fluide à travers les disques d'étanchéité (120) et de régulateur (122) depuis l'entrée (114) jusqu'à la sortie (116, 117) de la cartouche de valve (100).

13. Cartouche de valve selon l'une quelconque des revendications 7 à 12, dans laquelle le dispositif de valve (106) comprend également une tige de valve (124) qui s'étend le long de l'axe de rotation (126) du disque de régulateur (122) et qui est attachée de façon opérationnelle entre le moteur (108) et le disque de régulateur (122) de telle sorte que le moteur (108) puisse faire tourner le disque de régulateur (122).

14. Cartouche de valve selon la revendication 13, comprenant en outre une transmission (110) disposée de façon opérationnelle entre le moteur (108) et la tige de valve (124), la transmission (110) comprenant une entrée et une sortie, l'entrée étant attachée au moteur (108) de manière à être mise en rotation par celui-ci, et la sortie étant attachée à la tige de valve (124).

15. Cartouche de valve selon la revendication 14, dans laquelle le dispositif de valve (106) forme un joint étanche au fluide entre la transmission (110) et la cavité (102) dans le circuit de fluide externe.

16. Cartouche de valve selon l'une quelconque des revendications 13 à 15, dans laquelle la tige de valve (124) comprend une première extrémité (128) attachée au disque de régulateur (122) de façon à pouvoir être entraînée, et une deuxième extrémité (136) qui s'étend à travers et au-delà du boîtier de valve (118) afin d'établir une connexion opérationnelle d'entraînement avec le moteur (108).

17. Cartouche de valve selon la revendication 1, dans laquelle le dispositif de valve (106) comprend en outre un disque d'étanchéité stationnaire (120), et un disque de régulateur rotatif conjugué (122);
le disque de régulateur rotatif (122) étant connecté de façon opérationnelle au moteur (108) par une transmission (110), et pouvant être mis en rotation de façon sélective par le moteur (108), afin de commander un écoulement de fluide depuis l'entrée (114) jusqu'à la sortie (116, 117) de la cartouche de valve (100).

18. Cartouche de valve selon la revendication 17, dans laquelle au moins un du disque d'étanchéité (120) et du disque de régulateur (122) comprend un matériau céramique.

19. Cartouche de valve selon la revendication 17 ou 18, dans laquelle le dispositif de valve (106) forme un joint étanche au fluide entre la transmission (110) et la cavité (102) dans le circuit de fluide externe (104).

20. Cartouche de valve selon l'une quelconque des revendications 17 à 19, comprenant en outre un support de transmission qui attache la transmission (110) au boîtier de valve (234).

21. Cartouche de valve selon l'une quelconque des revendications 17 à 20, dans laquelle le moteur (108) est attaché à la structure de support de transmission.

22. Cartouche de valve selon l'une quelconque des revendications 17 à 21, dans laquelle la transmission (110) comprend un train d'engrenages.

23. Cartouche de valve selon la revendication 22, dans laquelle le train d'engrenages (110) comprend un ou plusieurs étage(s) de démultiplication planétaire(s) (170, 172, 174), où chaque étage de démultiplication planétaire (170, 172, 174) comprend un pignon d'entrée (178, 180, 182) qui entraîne un ou plusieurs engrenages planétaires monté(s) sur un porte-satellites (186, 188, 192), et le porte-satellites (186, 188, 192) de chacun desdits un ou plusieurs étage(s) de démultiplication planétaire(s) (170, 172, 174) forme une sortie de l'étage concerné desdits un ou plusieurs étage(s) de démultiplication planétaire(s) (170, 172, 174).

24. Cartouche de valve selon la revendication 23, dans laquelle le pignon d'entrée (178) du premier étage (170) du train d'engrenages (110) est attaché directement au moteur (108), afin d'être entraîné par celui-ci.

25. Cartouche de valve selon la revendication 23 ou 24, dans laquelle:
le disque de régulateur (122) peut être mis en rotation autour d'un axe de rotation (126) du disque de régulateur (122); et
le train d'engrenages (110) comprend deux ou plus de deux étages de démultiplication planétaires (170, 172, 174) qui ont leurs satellites d'entrée et leurs sorties alignés de façon concentrique autour de l'axe de rotation (126) du disque de régulateur (122).

26. Cartouche de valve selon la revendication 25, dans laquelle les deux ou plus de deux étages de démultiplication planétaires (170, 172, 174) sont disposés axialement les uns par rapport aux autres le long de l'axe de rotation (126) du disque de régulateur (122), avec la sortie de l'un des deux ou plus de deux étages de démultiplication planétaires (170, 172, 174) qui forme le pignon d'entrée du deuxième (172) des deux ou plus de deux étages de démultiplication planétaires (170, 172, 174).

27. Cartouche de valve selon la revendication 25 ou 26, dans laquelle:
les deux ou plus de deux étages de démultiplication planétaires (170, 172, 174) sont connectés de façon opérationnelle dans une relation en série, où l'un du ou des deux ou plus de deux étage (s) de démultiplication planétaire(s) (170, 172, 174) forme un premier étage (170) du train d'engrenages, et un autre des deux ou plus de deux étages de démultiplication planétaires forme un étage final (174) du train d'engrenages; et
la sortie de l'étage final (174) du train d'engrenages est attachée de façon opérationnelle au disque de régulateur (122) de telle sorte que la rotation du pignon d'entrée (180) du premier étage (170) entraîne la sortie de l'étage final (174) à faire tourner le disque de régulateur (122).

28. Cartouche de valve selon l'une quelconque des revendications 25 à 27, dans laquelle le train d'engrenages comprend en outre un boîtier de transmission (176) disposé autour des multiples étages de démultiplication planétaires (170, 172, 174) et comprend une surface interne configurée pour former une couronne dentée stationnaire commune (206) en relation d'engrènement avec les engrenages planétaires de tous les étages de démultiplication planétaires (170, 172, 174), afin de connecter ainsi de façon opérationnelle les multiples étages de démultiplication planétaires (170, 172, 174) les uns aux autres dans une relation de train d'engrenages en série qui s'étend depuis le premier étage (170) jusqu'à l'étage final (174) du train d'engrenages.

29. Cartouche de valve selon la revendication 28, comprenant en outre un détecteur de position (200) relié de façon opérationnelle à la sortie de l'étage final (174), afin de détecter ainsi une position angulaire de la sortie de l'étage final (174) autour de l'axe de rotation (126) du disque de régulateur (122).

30. Cartouche de valve selon la revendication 29, dans lequel la sortie de l'étage final (174) comprend une ou plusieurs caractéristique(s) de surface (196, 198) qui présentent une configuration qui peut être détectée par le détecteur de position (200).

31. Cartouche de valve selon la revendication 27, comprenant en outre un détecteur de position (200) relié de façon opérationnelle à la sortie de l'étage final (174) afin de détecter ainsi une position angulaire du disque de régulateur (122) autour de l'axe de rotation (126) du disque de régulateur (122).

32. Cartouche de valve selon la revendication 31, dans laquelle le dispositif de valve (106) comprend en outre une tige de valve (124) qui s'étend le long de l'axe de rotation (126) du disque de régulateur (122), la tige de valve (124) comprenant une première extrémité (128) attachée au disque de régulateur (122), et une deuxième extrémité (136) connectée pour son entraînement à la sortie de l'étage final (174) du train d'engrenages planétaires (110).

33. Cartouche de valve selon la revendication 1, dans laquelle le dispositif de valve (106) comprend un boîtier de valve (118), un disque d'étanchéité (120), un disque de régulateur rotatif (122) et une tige de valve (124);
le boîtier de valve (118) définit l'entrée de fluide (114) et la sortie de fluide (116, 117) de la cartouche de valve (100), un axe de rotation (126) du disque de régulateur (122) et la partie mouillée (112) de la cartouche de valve (100);
la tige de valve (124) s'étend le long de l'axe de rotation (126) du disque de régulateur (122), où la tige de valve (124) comprend une première extrémité (128) attachée au disque de régulateur (122) de façon à pouvoir être entraînée, et une deuxième extrémité (136) qui s'étend à travers et au-delà du boîtier de valve (118) afin d'établir une connexion opérationnelle d'entraînement avec le train d'engrenages (170, 172, 174);
la transmission (110) comprend un train d'engrenages comprenant de multiples étages de démultiplication planétaires (170, 172, 174), comprenant au moins un premier étage et un étage final de démultiplication planétaire (170, 174), où chaque étage de démultiplication planétaire comprend un pignon d'entrée (178, 180, 182) qui entraîne un ou plusieurs engrenage(s) planétaire(s) monté(s) sur un porte-satellites (186, 188, 192), et le porte-satellites (186, 188, 192) de chacun des multiples étages de démultiplication planétaires (170, 172, 174) forme une sortie de l'étage concerné des multiples étages de démultiplication planétaires (170, 172, 174);
les multiples étages de démultiplication planétaires (170, 172, 174) du train d'engrenages planétaires (110) sont disposés axialement les uns par rapport aux autres le long de l'axe de rotation (126) du disque de régulateur (122), où la sortie de tous les étages sauf l'étage final (174) du train d'engrenages planétaires forme le pignon d'entrée (178, 180, 182) d'un étage voisin du train d'engrenages planétaires (110), les pignons d'entrée (178, 180, 182) et les sorties de tous les étages du train d'engrenages planétaires (110) étant alignés de façon concentrique autour de l'axe de rotation (126) du disque de régulateur (122), et le pignon d'entrée (178) du premier étage (170) du train d'engrenages (110) étant attaché directement au moteur (108), afin d'être entraîné par celui-ci;
le train d'engrenages (110) comprend en outre un boîtier de transmission (176) disposé autour des multiples étages de démultiplication planétaires (170, 172, 174) et comprend une surface interne configurée pour former une couronne dentée stationnaire commune (206) en relation d'engrènement avec les engrenages planétaires de tous les étages de démultiplication planétaires (170, 172, 174), afin de connecter ainsi de façon opérationnelle les multiples étages de démultiplication planétaires (170, 172, 174) les uns aux autres dans une relation de train d'engrenages en série qui s'étend depuis le premier étage (170) jusqu'à l'étage final (174) du train d'engrenages (110);
la sortie de l'étage final (174) du train d'engrenages est attachée de façon opérationnelle à la deuxième extrémité (136) de la tige de valve (124) de telle sorte que la rotation du pignon d'entrée (178) du premier étage (170) par le moteur (108) entraîne la sortie de l'étage final (174) à faire tourner le disque de régulateur (122);
le disque d'étanchéité (120) est attaché fixement au boîtier de valve (118);
le disque d'étanchéité (120) et le disque de régulateur (122) définissent des surfaces d'étanchéité conjuguées correspondantes (154, 156) pour former une interface étanche entre les surfaces d'étanchéité (154, 156); et
le disque d'étanchéité (120) et le disque de régulateur (122) définissent en outre chacun des passages de fluide respectifs (158, 160, 162, 164) à travers eux qui peuvent être alignés, par l'intermédiaire d'une rotation sélective du disque de régulateur (122) par le moteur (108), afin de former un chemin d'écoulement de fluide à travers les disques d'étanchéité (120) et de régulateur (122) depuis l'entrée (114) jusqu'à la sortie (116, 117) de la cartouche de valve (100).

34. Cartouche de valve selon la revendication 33, dans laquelle au moins un du disque d'étanchéité (120) et du disque de régulateur (122) comprend un matériau céramique.

35. Cartouche de valve selon la revendication 33 ou 34, dans laquelle le dispositif de valve (106) forme un joint étanche au fluide (152) entre la transmission (110) et la cavité (102) dans le circuit de fluide externe.

36. Cartouche de valve selon l'une quelconque des revendications 33 à 35, dans laquelle la structure de support de transmission est attachée au boîtier de valve (118), et le moteur (108) est attaché à la structure de support de transmission.

37. Procédé de fabrication d'une cartouche de valve hydraulique commandée par moteur (100), pour commander un écoulement de fluide à travers une cavité (102) dans un circuit de fluide externe à la cartouche de valve (100), le procédé comprenant:
la jonction d'un dispositif de valve (106) et d'un moteur (108) en une structure unitaire adaptée pour être attachée de façon amovible au circuit de fluide externe;
la structure unitaire comprenant une partie mouillée (112) qui comprend une entrée de fluide (114) et une sortie de fluide (116, 117) de la cartouche de valve (100), la partie mouillée (112) définissant partiellement la cavité (102) lorsque la cartouche de valve (100) est attachée au circuit de fluide externe;
le dispositif de valve (106) comprenant un élément rotatif (122) pour commander un écoulement de fluide entre l'entrée (114) et la sortie (116, 117) de la cartouche de valve (100); et
le moteur (108) étant attaché fixement au dispositif de valve (106) et connecté de façon opérationnelle à l'élément rotatif (122) du dispositif de valve (106) afin de commander de façon sélective un écoulement de fluide depuis l'entrée (114) jusqu'à la sortie (116, 117) de la cartouche de valve (100).

38. Procédé selon la revendication 37, comprenant en outre la connexion opérationnelle du moteur (108) à l'élément rotatif (122) par l'intermédiaire d'un train de démultiplication planétaire (110).

39. Procédé selon la revendication 36 ou 37, comprenant en outre la fixation de la cartouche de valve (100) au circuit de fluide externe avec au moins une partie (112) de la partie mouillée (112) qui s'étend dans la cavité (102).
